# EUROPEAN PATENT APPLICATION

(11) **EP 4 660 792 A1**
(43) Date of publication of application: **10.12.2025**
(21) Application number: 24756279.6
(22) Date of filing: 08.02.2024
(51) Int. Cl.: G06F 9/38, G06N 3/08

(54) **MODEL TRAINING METHOD AND APPARATUS BASED ON HYBRID PARALLELISM MODE, AND DEVICE**

(30) Priority: 16.02.2023 CN 202310158460
(71) Applicant: Huawei Technologies Co., Ltd., Shenzhen, Guangdong 518129 (CN)
(72) Inventor: LI, Fanxin, Hong Kong, Pokfulam, Hong Kong 999077 (CN); ZHAO, Shixiong, Shenzhen, Guangdong 518129 (CN); CUI, Heming, Hong Kong, Pokfulam, Hong Kong 999077 (CN); WANG, Sen, Shenzhen, Guangdong 518129 (CN); CHEN, Li, Shenzhen, Guangdong 518129 (CN); ZHANG, Gong, Shenzhen, Guangdong 518129 (CN)
(74) Representative: Goddar, Heinz J.
(86) International application number: PCT/CN2024/076861
(87) International publication number: WO 2024/169906

(57) **Abstract**

This application discloses a model training method and apparatus based on a hybrid parallelism manner, and a device, and belongs to the field of artificial intelligence technologies. In this method, a neural network model is divided into a plurality of pipeline stages, and each pipeline stage includes a plurality of sub-stages of the neural network model. Computing nodes corresponding to the plurality of pipeline stages are invoked in a hybrid parallelism manner according to a sequence of sub-stages in the neural network model. When iterative training is performed on a network layer in a corresponding pipeline stage, because sub-stages at same locations in adjacent pipeline stages are consecutive in the neural network model, the computing node does not need to wait for completion of forward propagation of a previous pipeline stage, and can perform forward propagation on the corresponding pipeline stage only after forward propagation of the 1^{st} sub-stage in the previous pipeline stage is completed. This reduces idle duration of the computing node in a training process, and improves utilization of the computing node.

## Description

This application claims priority to Chinese Patent Application No. 202310158460.6, filed on February 16, 2023 and entitled "MODEL TRAINING METHOD AND APPARATUS BASED ON HYBRID PARALLELISM MANNER, AND DEVICE", which is incorporated herein by reference in its entirety.

### TECHNICAL FIELD

This application relates to the field of artificial intelligence technologies, and in particular, to a model training method and apparatus based on a hybrid parallelism manner, and a device.

### BACKGROUND

As a structure of a deep neural network (deep neural network, DNN) model becomes increasingly complex, a quantity of model parameters of the deep neural network model also increases. To improve efficiency of training the deep neural network model, currently, the deep neural network model is trained in a hybrid parallelism manner including a data parallelism (data parallelism, DP) manner and a pipeline parallelism (pipeline parallelism, PP) manner.

The data parallelism manner is partitioning training data and training a plurality of deep neural network copy models by using the partitioned training data. The pipeline parallelism manner is dividing training data into a plurality of data batches, dividing a deep neural network model into a plurality of pipeline stages, and training each pipeline stage by using one computing node. In a training process, when forward propagation is performed on a data batch, forward propagation can be performed on a next pipeline stage only after forward propagation of the pipeline stage is completed. In this case, a computing node corresponding to the next pipeline stage needs to wait for completion of forward propagation of the pipeline stage to perform forward propagation on the corresponding pipeline stage. As a result, in a process of training a deep neural network, a computing node has a large amount of idle time, causing low utilization of the computing node.

### SUMMARY

Embodiments of this application provide a model training method and apparatus based on a hybrid parallelism manner, and a device, to improve utilization of a computing node in a training process of a neural network. Technical solutions are as follows.

According to a first aspect, a model training method based on a hybrid parallelism manner is provided. The hybrid parallelism manner includes a data parallelism manner and a pipeline parallelism manner. In this method, for a to-be-trained neural network model, a plurality of pipeline stages of the neural network model in the pipeline parallelism manner are first determined. Then, computing nodes corresponding to the plurality of pipeline stages are invoked in the hybrid parallelism manner according to a sequence of sub-stages in the neural network model. Iterative training is performed on a network layer in a corresponding pipeline stage. Each pipeline stage includes a plurality of sub-stages of the neural network model. Sub-stages at same locations in adjacent pipeline stages are consecutive in the neural network model. The sub-stage includes at least one network layer of the neural network model.

In this method, the neural network model is divided into the plurality of pipeline stages, and each pipeline stage includes a plurality of sub-stages of the neural network model. The computing nodes corresponding to the plurality of pipeline stages are invoked in the hybrid parallelism manner according to the sequence of the sub-stages in the neural network model. When iterative training is performed on the network layer in the corresponding pipeline stage, because the sub-stages at the same locations in the adjacent pipeline stages are consecutive in the neural network model, the computing node does not need to wait for completion of forward propagation of a previous pipeline stage, and can perform forward propagation on the corresponding pipeline stage only after forward propagation of the 1^{st} sub-stage in the previous pipeline stage is completed. This reduces idle duration of the computing node in a training process, and improves utilization of the computing node.

In a possible implementation, a manner of determining the plurality of pipeline stages of the neural network model in the pipeline parallelism manner is, for example, determining a plurality of slices of the neural network model; partitioning each of the plurality of slices, to obtain a plurality of sub-stages of each slice; and then, combining sub-stages at same locations in the plurality of slices to form a pipeline stage. Each slice includes a plurality of consecutive network layers in the neural network model. And network layers in adjacent sub-stages in same distribution are consecutive.

Based on the foregoing possible implementation, sub-stages at same locations in the plurality of slices of the neural network model form one pipeline stage. In this way, sub-stages in a same pipeline stage are inconsecutive in the neural network model, and sub-stages at same locations in adjacent pipeline stages are consecutive in the neural network model. The computing nodes corresponding to the plurality of pipeline stages are invoked in the hybrid parallelism manner according to the sequence of the sub-stages in the neural network model. When iterative training is performed on the network layer in the corresponding pipeline stage, the computing node does not need to wait for completion of forward propagation of the previous pipeline stage, and can perform forward propagation on the corresponding pipeline stage only after forward propagation of the 1^{st} sub-stage in the previous pipeline stage is completed. This reduces the idle duration of the computing node in the training process, and improves utilization of the computing node.

In a possible implementation, invoking, in the hybrid parallelism manner according to the sequence of the sub-stages in the neural network model, the computing nodes corresponding to the plurality of pipeline stages, to perform iterative training on the network layers in the corresponding pipeline stages includes the following steps: in any iterative training process, invoking, in the pipeline parallelism manner according to the sequence of the sub-stages in the neural network model, the computing nodes corresponding to the plurality of pipeline stages, and sequentially obtaining gradient information of each sub-stage in a corresponding pipeline stage for a plurality of data batches; and then, updating, in the data parallelism manner, model parameters of a network layer in one sub-stage based on gradient information of the sub-stage for the plurality of data batches, each time the gradient information of the sub-stage for the plurality of data batches is obtained.

Based on the foregoing possible implementation, the model parameters of the network layer in the sub-stage are updated based on the gradient information of the sub-stage for the plurality of data batches, each time the gradient information of the sub-stage for the plurality of data batches is obtained. Gradient update can be enabled without waiting for gradient information of an entire pipeline stage, thereby reducing a blocking time of the pipeline parallelism manner for the data parallelism manner.

In a possible implementation, invoking, in the pipeline parallelism manner according to the sequence of the sub-stages in the neural network model, the computing nodes corresponding to the plurality of pipeline stages, and sequentially obtaining the gradient information of each sub-stage in the corresponding pipeline stage for the plurality of data batches includes the following steps: for any sub-stage in any pipeline stage, each time a forward data batch of the sub-stage is obtained, invoking a first computing node, and performing forward propagation computation on the forward data batch based on model parameters of a network layer in the sub-stage, to obtain a forward computation result of the sub-stage; and each time a backward data batch of the sub-stage is obtained, invoking the first computing node, performing backward propagation computation on the backward data batch based on the model parameters of the sub-stage to obtain a backward computation result of the sub-stage, and obtaining gradient information of the sub-stage based on the backward computation result. The first computing node is a computing node corresponding to a pipeline stage to which the sub-stage belongs. When the sub-stage is the 1^{st} sub-stage of the neural network model, a forward data batch of the sub-stage is any data batch of the plurality of data batches. When the sub-stage is not the 1^{st} sub-stage, the forward data batch of the sub-stage is a forward computation result of a previous sub-stage of the sub-stage in the neural network model. When the sub-stage is the last sub-stage of the neural network model, a backward data batch of the sub-stage is obtained based on a forward computation result of the sub-stage. When the sub-stage is not the last sub-stage, the backward data batch is a backward computation result of a next sub-stage of the sub-stage in the neural network model.

Based on the foregoing possible implementation, because fine-grained division is performed on a network layer in a pipeline stage according to sub-stages, and sub-stages at same locations in adjacent pipeline stages are consecutive in the neural network model. In a forward propagation process, each pipeline stage other than the 1^{st} pipeline stage needs to wait for only the 1^{st} forward computation result of the 1^{st} sub-stage in the previous pipeline stage, to start forward propagation computation of a corresponding pipeline stage without waiting for completion of forward propagation of the previous pipeline stage. In this way, a waiting time (that is, an idle time) of a computing node corresponding to each pipeline stage in the forward propagation process is shortened, and utilization of the computing node is improved. In a backward propagation process, a computing node corresponding to each pipeline stage other than the last pipeline stage needs to wait for only the 1^{st} backward computation result of the last sub-stage in the next pipeline stage, to start backward propagation computation of a corresponding pipeline stage without waiting for completion of backward propagation of the next pipeline stage. In this way, a waiting time of a computing node in the backward propagation process is shortened, and utilization of the computing node is improved.

In a possible implementation, the computing nodes corresponding to the plurality of pipeline stages are located on different computing devices, computing nodes corresponding to a same pipeline stage are located on a same computing device, and the method further includes the following steps: if the sub-stage is not the last sub-stage of the neural network model, synchronizing the forward computation result of the sub-stage in the first computing node to a second computing node through a point-to-point communication operation in a first communication library; and if the sub-stage is not the 1^{st} sub-stage of the neural network model, synchronizing the backward computation result of the sub-stage in the first computing node to a third computing node through the communication operation. The second computing node is a computing node corresponding to a pipeline stage to which the next sub-stage of the sub-stage in the neural network model belongs, and the third computing node is a computing node corresponding to a pipeline stage to which the previous sub-stage of the sub-stage in the neural network model belongs.

Based on the foregoing possible implementation, the forward computation result of the sub-stage is synchronized to the second computing node corresponding to the next sub-stage of the sub-stage of the neural network model, and the backward computation result of the sub-stage is synchronized to the third computing node corresponding to the previous sub-stage of the sub-stage of the neural network model. In this way, the second computing node continues to forward propagate the forward computation result in the next sub-stage as soon as possible, and the third computing node continues to backward propagate the backward computation result in the previous sub-stage as soon as possible, so that subsequent computation on the first computing node, the second computing node, and the third computing node can be performed in parallel, thereby reducing duration of iterative training.

In a possible implementation, the neural network model is a copy of a target neural network model, and the target neural network model has a plurality of copies. Updating, in the data parallelism manner, the model parameters of the network layer in the sub-stage based on the gradient information of the sub-stage for the plurality of data batches, each time the gradient information of the sub-stage for the plurality of data batches is obtained includes the following steps: each time the gradient information of the sub-stage in the plurality of copies for the plurality of data batches is obtained, summing up the gradient information of the sub-stage in the plurality of copies for the plurality of data batches through an all-reduce operation in a second communication library to obtain total gradient information of the sub-stage, and updating the model parameters of the network layer in the sub-stage based on the total gradient information.

Based on the foregoing possible implementation, each time the gradient information of the sub-stage in the plurality of copies for the plurality of data batches is obtained, a gradient update process for the sub-stage can be started without waiting for gradient information obtained by pipeline stages of all copies, thereby reducing a blocking time in the pipeline parallelism manner for the data parallelism manner.

According to a second aspect, a model training apparatus based on a hybrid parallelism manner is provided, and is configured to perform the foregoing model training method based on the hybrid parallelism manner. Specifically, the model training apparatus based on the hybrid parallelism manner includes a functional module configured to perform the model training method based on the hybrid parallelism manner according to the first aspect or any optional manner of the first aspect.

According to a third aspect, a control device is provided. The control device includes a processor. The processor is configured to execute program code, so that the control device performs operations performed in the foregoing model training method based on the hybrid parallelism manner.

According to a fourth aspect, a computer-readable storage medium is provided. The storage medium stores at least one piece of program code. The program code is read by a processor, so that a control device performs operations performed in the foregoing model training method based on the hybrid parallelism manner.

According to a fifth aspect, a computer program product or a computer program is provided. The computer program product or the computer program includes program code. The program code is stored in a computer-readable storage medium. A processor of a control device reads the program code from the computer-readable storage medium. The processor executes the program code, so that a computer device performs the method according to the first aspect or any optional implementation of the first aspect.

Based on the implementations provided in the foregoing aspects, this application may further combine technologies in this application to provide more implementations.

### BRIEF DESCRIPTION OF DRAWINGS

FIG. 1 is a diagram of a three-dimensional parallelism training manner of a neural network model according to a related technology;
FIG. 2 is a diagram of a training principle of a pipeline parallelism manner according to a related technology;
FIG. 3 is a diagram of a parallelism training system of a neural network according to an embodiment of this application;
FIG. 4 is diagram of a working principle of a controller 302 according to an embodiment of this application;
FIG. 5A and FIG. 5B are a diagram of a model training principle of a hybrid parallelism manner according to an embodiment of this application;
FIG. 6 is a flowchart of a model training method based on a hybrid parallelism manner according to an embodiment of this application;
FIG. 7 is a diagram of model training of a hybrid parallelism manner according to an embodiment of this application;
FIG. 8A and FIG. 8B are a flowchart of training a pipeline stage by a process according to an embodiment of this application;
FIG. 9 is a working flowchart of a communicator according to an embodiment of this application;
FIG. 10 is a diagram of throughput comparison between a baseline system and a parallelism training system according to an embodiment of this application;
FIG. 11 is a diagram of time comparison between a baseline system and a parallelism training system in one time of iterative training according to an embodiment of this application;
FIG. 12 is a diagram of comparison between training loss values of a baseline system and a parallelism training system according to an embodiment of this application;
FIG. 13 is a diagram of a structure of a model training apparatus based on a hybrid parallelism manner according to an embodiment of this application; and
FIG. 14 is a diagram of a structure of a control device according to an embodiment of this application.

### DESCRIPTION OF EMBODIMENTS

To make the objectives, technical solutions, and advantages of this application clearer, the following further describes the implementations of this application in detail with reference to the accompanying drawings.

The following describes some terms in this application.

All-reduce (AllReduce) operation: is a communication operation of summing up target arrays of all related processes (processes) (that is, ALL) to reduce a plurality of target arrays to a single array (that is, Reduce), and returning a result array to all the processes.

Neural network model: The neural network model includes a plurality of connected neural network layers (network layer for short). Input and output of the network layer are referred to as tensors, that is, an input tensor and an output tensor. Each network layer includes a group function. The group function is used to map the input tensor of the network layer. Parameters of the group function form parameters (also referred to as model parameters) of the network layer and the neural network model. In a possible implementation, the neural network model uses a layer stacking structure, network layers of the neural network model having the layer stacking structure are sequentially connected, and all these network layers use a same structure (that is, same internal functions but different parameters of the functions). The neural network model is, for example, a deep neural network model.

Model training: is a process of fitting a relationship between data (input) in a dataset and labels (output) by using a neural network model. Training of the neural network model is performed iteratively. A group of data is taken from a data set in each time of iterative training. The group of data is a data batch (batch) that participates in one time of iterative training. Then, the neural network model performs forward propagation and back propagation (that is, a computation task) based on the data batch. Forward propagation means to input data in the data batch into the neural network model to generate a predicted label and calculate an error between the predicted label and a real label of the data batch. Backward propagation means to feed back the error layer by layer from back to front along network layers. Each network layer generates gradient information of parameters based on the fed-back error. Then, the gradient information is used to update the model parameters. When the parameters are updated along a gradient direction, the error between the predicted label and the real label can be reduced.

Parallelism training manner: means that a plurality of computing nodes simultaneously execute a computation task in a model training process of a neural network model. A time of training the neural network model is shortened in the parallelism training manner. The parallelism training manner is, for example, a hybrid parallelism manner. The hybrid parallelism manner includes at least two of a data parallelism manner, a pipeline parallelism manner, and a tensor parallelism manner.

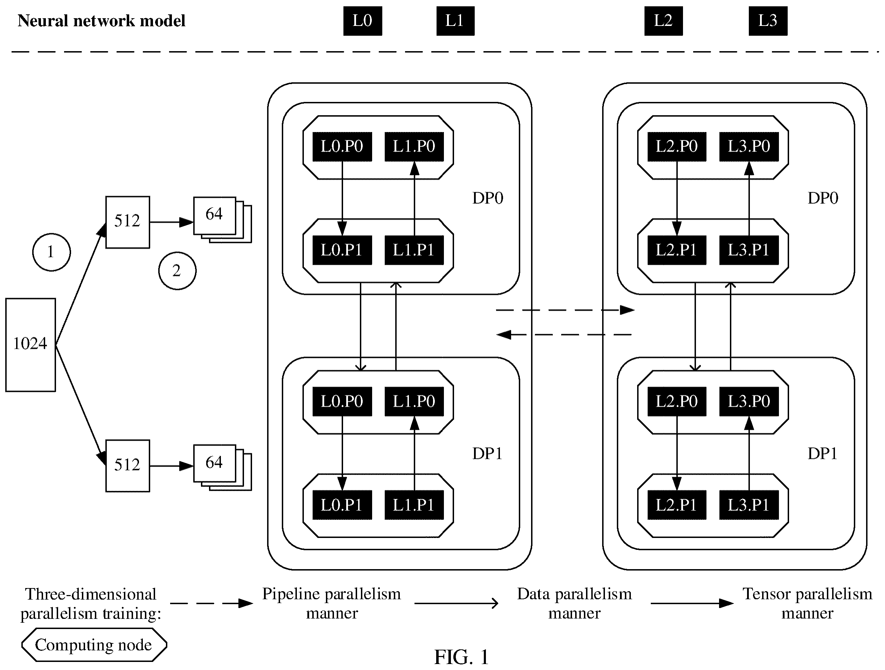

Data parallelism manner: A to-be-trained neural network model has a plurality of copies (referred to as copy models). Each copy model is allocated to one data parallelism group. The data parallelism group includes at least one computing node. One data batch (batch) is divided into a plurality of mini-batches (mini-batches). Each mini-batch is allocated to one data parallelism group. A computing node in the data parallelism group trains the copy model based on the allocated mini-batch. A diagram of a three-dimensional parallelism training manner of a neural network model provided in a related technology shown in FIG. 1 is used as an example. It is assumed that the neural network model has four network layers: network layers L0 to L3. Eight computing nodes are grouped into two data parallelism groups: DP0 and DP1. Each data parallelism group includes four computing nodes. Each data parallelism group has one copy model of the neural network model. A data batch including 1024 pieces of data is divided into two mini-batches. Each mini-batch includes 512 pieces of data. The two mini-batches are respectively allocated to DP0 and DP1. In a process of performing one time of iterative training on a target neural network model, for each copy model, one time of iterative training is performed on one copy model based on one mini-batch by using each data parallelism group, to obtain gradient information of each network layer in the copy model; gradient information of a same network layer in a plurality of copy models is summed up through an AllReduce operation, to obtain total gradient information of the network layer; and model parameters of the network layer are updated based on the total gradient information, and updated model parameters are synchronized to a computing node in each data parallelism group, to update model parameters of the network layer in each copy model. When model training is performed on the neural network model in a hybrid parallelism manner, in each data parallelism group, a computing node may be further allocated to a network layer of a copy model in at least one of a tensor parallelism manner and a pipeline parallelism manner, and the allocated network layer is trained in at least one manner by using the corresponding computing node.

The pipeline parallelism manner is dividing the neural network model into a plurality of pipeline stages, where each pipeline stage includes at least one network layer. Different pipeline stages are allocated to different computing nodes. In a process of performing iterative training on the neural network model through pipeline parallelism, in order that a plurality of pipeline stages can be trained in parallel, a mini-batch is divided into a plurality of micro-batches (micro-batches). FIG. 1 is still used as an example. A four-layer neural network model is divided into two pipeline stages: stages 0 and 1. The stage 0 includes network layers L0 and L1. The stage 1 includes network layers L1 and L2. The data parallelism group DP0 is used as an example. The stages 0 and 1 are respectively allocated to two computing nodes in DP0. One mini-batch including 512 pieces of data is divided into eight micro-batches including 64 pieces of data. In a forward propagation process in one iterative training process, from the first pipeline stage, the plurality of micro-batches are sequentially input into the 1^{st} pipeline stage, and a forward propagation result (that is, a forward computation result) of the 1^{st} pipeline stage for each micro-batch is computed. Each time a forward computation result is obtained, the forward computation result is input to a next pipeline stage and so on, until a forward computation result of the last pipeline stage for each micro-batch is computed. An error between the forward computation result (that is, a predicted label) of the last pipeline stage for each micro-batch and a predicted label of each micro-batch is used as a backward micro-batch in a backward propagation process. After a plurality of backward micro-batches for the plurality of micro-batches are obtained, the backward propagation process starts: From the last first pipeline stage, the plurality of backward micro-batches are sequentially input into the last pipeline stage. A backward propagation result (that is, a backward computation result) of the last pipeline stage for each backward micro-batch is computed. Each time a backward computation result is obtained, gradient information of the last pipeline stage for a micro-batch is obtained based on the backward computation result, and the backward computation result is input into a previous pipeline stage and so on, until gradient information of the 1^{st} pipeline stage for all the micro-batches is computed. Each time gradient information of a pipeline stage for all the micro-batches is obtained, model parameters of each network layer in the pipeline stage are updated based on the gradient information of the pipeline stage for all the micro-batches. After model parameters of all the network layers in the neural network model are updated, a next time of iterative training is performed. A process of updating the model parameters in the pipeline parallelism manner is also referred to as pipeline refresh.

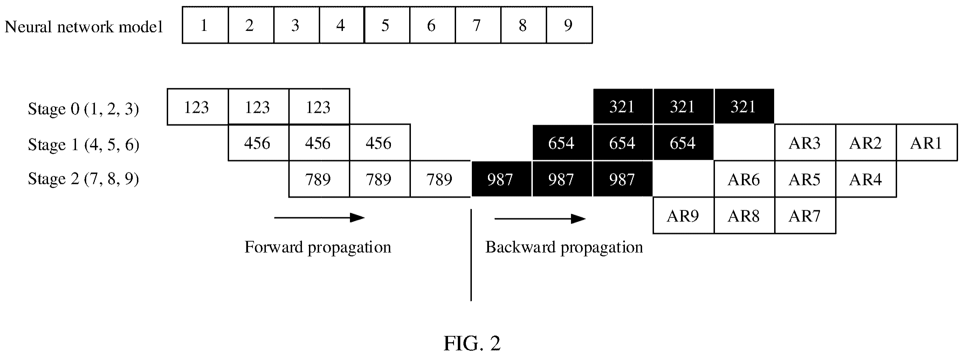

To further describe a training mechanism in a pipeline parallelism manner when a plurality of pipeline stages each include a plurality of consecutive network layers, refer to a diagram of a training principle of a pipeline parallelism manner according to a related technology in FIG. 2. As shown in FIG. 2, it is assumed that a to-be-trained neural network model includes nine network layers: network layers 1 to 9. The nine network layers are divided into three pipeline stages (stages): stages 0 to 2. The stage 0 includes the network layers 1 to 3. The stage 1 includes the network layers 4 to 6. The stage 2 includes the network layers 7 to 9. When one time of iterative training is performed on the neural network model in the pipeline parallelism manner, it is assumed that there are three micro-batches. In a forward propagation process, the stage 0 sequentially performs forward propagation computation on the three micro-batches, to obtain three forward computation results of the stage 0. Each time a forward computation result is obtained, the forward computation result is input into the stage 1. The stage 1 waits for each forward computation result of the stage 0. Each time the stage 1 obtains a forward computation result of the stage 0, the stage 1 performs forward propagation computation on the forward computation result, and inputs the calculated forward computation result of the stage 1 to the stage 2 and so on, until the stage 2 sequentially completes forward propagation computation for the three micro-batches. An error between each forward computation result of the stage 2 and a real label is used as a backward micro-batch of a micro-batch. In a backward propagation process, in a back-to-front sequence of the network layers, the stage 2 sequentially performs backward propagation computation on the three backward micro-batches, to obtain three forward computation results of the stage 2. Each time a backward computation result is obtained, one piece of gradient information of the stage 2 is obtained based on the backward computation result, and the backward computation result is input into the stage 1. After obtaining the three forward computation results, the stage 1 waits for each backward computation result of the stage 2. Each time the stage 1 obtains a backward computation result of the stage 2, the stage 1 performs backward propagation computation on the backward computation result, obtains gradient information of the stage 1 based on the computed backward computation result of the stage 1, and inputs the backward computation result of the stage 1 to the stage 0, and so on, until the stage 0 sequentially completes backward propagation computation for the three micro-batches. In a case in combination with the data parallelism manner, the gradient information of the same network layer in the plurality of copy models for all the micro-batches is completed at the same time or almost at the same time. Each time the gradient information of the same network layer in all the copy models for all the micro-batches is obtained, the gradient information of the same network layer in all the copy models for all the micro-batches is summed up, to obtain total gradient information (AR) of the network layer. For example, total gradient information of network layers 9 to 1 in FIG. 2 is respectively AR9 to AR1. Each time total gradient information of one network layer is obtained, model parameters of the network layer are updated based on the total gradient information of the network layer, and updated model parameters of the network layer are synchronized to each data parallelism group, until updated model parameters of the network layer 1 are synchronized to each data parallelism group. In this case, one iterative training process of the neural network model ends.

It can be learned from FIG. 2 that the last pipeline stage first completes computation of gradient information for all micro-batches, and the 1^{st} pipeline stage last completes computation of gradient information for all micro-batches. Only after the last pipeline stage completes computation of the gradient information for all the micro-batches, total gradient information of each network layer in a neural network model can be computed in a data parallelism manner, to perform gradient refresh. In this case, the data parallelism manner blocks a gradient refresh process in a pipeline parallelism manner to some extent, thereby increasing duration of each time of iterative training. In addition, in one iterative training process, each pipeline stage needs to wait for a forward computation result or a backward computation result of an adjacent pipeline stage. As a result, in one iterative training process, a computing node corresponding to the pipeline stage has a large amount of idle time, causing low utilization of the computing node. However, this problem can be well resolved by using the model training method based on the hybrid parallelism manner according to this application. Description is subsequently provided with reference to a specific embodiment. Details are not described herein again.

Tensor parallelism manner: means to divide each network layer in a neural network model into a plurality of parts, and allocate each part to a different computing node for training, where each part includes a part of output tensors, a part of input tensors, and a part of model parameters of the network layer. As shown in FIG. 1, a copy model corresponding to the data parallelism group DP0 is used as an example, and network layers L0 to L3 of the copy model each are divided into two parts. For example, two parts of the network layer L0 are: L0.P0 and L0.P1. L0.P0 and L0.P1 are allocated to different computing nodes in DP0. Parts at the same locations in different network layers may be allocated to a same computing node, or may be allocated to different computing nodes. For example, the L0.P0 part of the network layer L0 and an L1.P0 part of the network layer L1 are allocated to a same computing node, and the L0.P0 part of the network layer L0 and an L2.P0 part of the network layer L2 are allocated to different computing nodes. In forward propagation and back propagation processes, input and output tensors (that is, inter-layer tensors) are synchronized for divided network layers through an AllReduce operation, and all inter-layer tensors of a same network layer are synchronized in one iterative training process. Because synchronization of the inter-layer tensors has a high requirement on communication bandwidth, different computing nodes on a same computing device are usually allocated to a same network layer in the tensor parallelism manner, so that inter-layer tensors on different computing nodes can be synchronized by using a high-speed link of a same computing device.

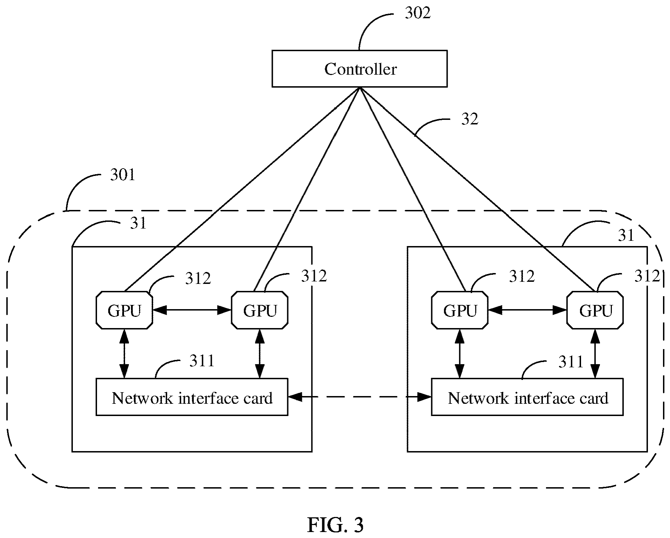

With reference to FIG. 3, the following describes an implementation environment of a model training method based on a hybrid parallelism manner provided in this application.

FIG. 3 is a diagram of a parallelism training system of a neural network according to an embodiment of this application. With reference to FIG. 3, the parallelism training system includes a computing cluster 301 and a controller 302. The computing cluster 301 includes a plurality of computing devices 31. The computing device 31 is any device configured to provide a computing function. For example, the computing device 31 is a server. It should be understood that FIG. 3 shows an example in which the computing cluster 301 includes two computing devices 31. The computing cluster 301 may alternatively include more than two computing devices 31. Herein, a quantity of computing devices 31 in the computing cluster 301 is not limited in this embodiment of this application.

The plurality of computing devices 31 in the computing cluster 301 communicate with each other over a network. For example, each computing device 31 includes a network interface card 311, and network adapters 311 in different computing devices 31 communicate with each other over the network. The network interface card 311 includes an industry standard architecture (industry standard architecture, ISA) bus network interface card, a peripheral component interconnect standard (peripheral component interconnect, PCI) bus network interface card, a peripheral component interconnect express (peripheral component interconnect express, PCIe) network interface card, or another type of network interface card. A type of the network interface card 311 in the computing device 31 is not limited in this embodiment of this application.

Each computing device 31 includes at least one computing node 312. The computing node 312 is a processor having a computing function. For example, the computing node 312 is a graphics processing unit (graphics processing unit, GPU) or another type of processor applicable to model training. A type of the computing node 312 is not limited in this embodiment of this application. It should be understood that FIG. 3 shows an example in which the computing device 31 includes two computing nodes 312. The computing device 31 may alternatively include more than two computing nodes 312 or one computing node 312. Herein, a quantity of computing nodes 312 in the computing device 31 is not limited in this embodiment of this application.

When the computing device 31 includes a plurality of computing nodes 312, the plurality of computing nodes 312 may be connected to each other in the same computing device 31, so that the plurality of computing nodes 312 in the same computing device 31 can communicate with each other. In addition, the computing node 312 in the computing device 31 is connected to the network interface card 311, so that the computing node 312 communicates with a computing node in another computing device by using the connected network interface card 312 (as shown by using a dashed-line arrow in FIG. 3).

The controller 302 is configured to perform, on a to-be-trained neural network model, the model training method based on the hybrid parallelism manner provided in this application, to perform model training on the neural network model. In a process of performing the method, the computing node in the computing cluster 301 is invoked in the hybrid parallelism manner, to complete a computation task in a training process.

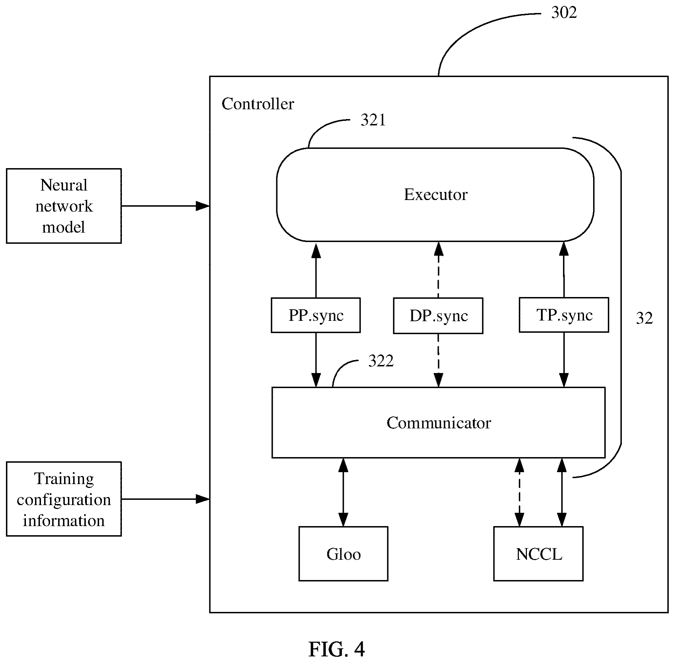

For example, FIG. 4 is a diagram of a working principle of a controller 302 according to an embodiment of this application. The controller 302 obtains a to-be-trained neural network model (referred to as a target neural network model) and training configuration information. The training configuration information indicates a hybrid parallelism manner for training the target neural network model. When the hybrid parallelism manner includes a data parallelism manner and a pipeline parallelism manner, the training configuration information includes a data parallelism group quantity d in the data parallelism manner and a pipeline stage quantity p in the pipeline parallelism manner, where both d and p are integers greater than 1.

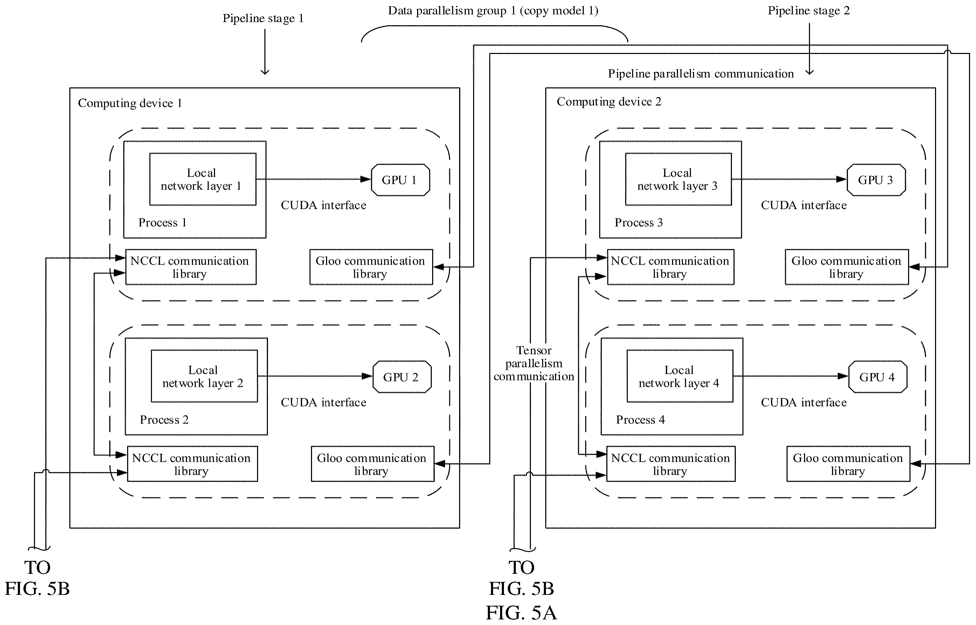

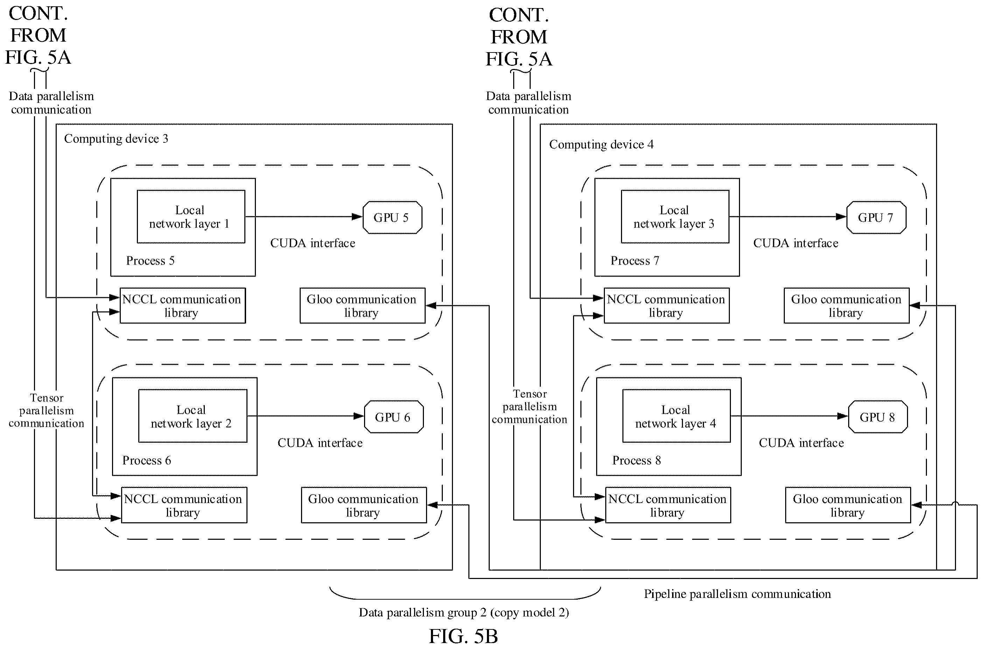

The controller 302 divides computing nodes 312 in a computing cluster 301 into d data parallelism groups based on the data parallelism group quantity d. Each data parallelism group includes a plurality of computing nodes 312. The target neural network model is duplicated for d times, to obtain d copy models. Each copy model is a copy of the target neural network model. Each copy model is allocated to one data parallelism group, to complete model allocation in the data parallelism manner. For example, FIG. 5A and FIG. 5B are a diagram of a model training principle of a hybrid parallelism manner according to an embodiment of this application. It is assumed that a computer cluster includes computing devices 1 to 4, and a computing node is a GPU. Each computing device includes two GPUs. If a data parallelism group quantity d is equal to 2, a controller considers GPUs 1 to 4 as a data parallelism group 1, considers GPUs 5 to 8 as a data parallelism group 2, and allocates copy models 1 and 2 of a target neural network model to the data parallelism groups 1 and 2.

In a possible implementation, as shown in FIG. 5A and FIG. 5B, when the computing cluster is divided in the data parallelism manner, computing nodes in different computing devices are divided into different data parallelism groups. When model training is performed on the target neural network model in the data parallelism manner, training information of different copy models (for example, gradient information of network layers of different copy models) in different data parallelism groups is synchronized through cross-device data parallelism communication.

For each data parallelism group, the controller 302 further divides computing nodes in the data parallelism group and a copy model in the pipeline parallelism manner. For example, the controller 302 divides the copy model into p pipeline stages based on the pipeline stage quantity p (for a division manner, refer to step 601 below). Each pipeline stage includes a plurality of network layers of the copy model. The computing nodes in the data parallelism group are divided into p computing node groups. Each pipeline stage is allocated to one computing node group. Each computing node group includes at least one computing node. In this way, pipeline stage allocation is completed in the pipeline parallelism manner. FIG. 5A and FIG. 5B are still used as an example. It is assumed that the pipeline stage quantity p is equal to 2. The data parallelism group 1 is used as an example. A GPU 1 and a GPU 2 in a computing device 1 are used as a computing node group 1. A GPU 3 and a GPU 4 in a computing device 2 are used as a computing node group 4. A copy model 1 is divided into pipeline stages 1 and 2. The pipeline stages 1 and 2 are respectively allocated to the computing node groups 1 and 2.

In a possible implementation, as shown in FIG. 5A and FIG. 5B, when allocating computing nodes to pipeline stages of a copy model in the pipeline parallelism manner, the controller 302 allocates different pipeline stages to computing nodes on different computing devices. When performing model training on the copy model in the pipeline parallelism manner, the controller 302 synchronizes training information of different pipeline stages through cross-device pipeline parallelism communication. The training information is, for example, a forward data batch and a backward data batch of a pipeline stage. The forward data batch is data input to a network layer in a forward propagation process. The backward data batch is data input to a network layer in a backward propagation process.

In a possible implementation, a quantity of computing nodes in a computing node group is determined based on whether the hybrid parallelism manner includes the tensor parallelism manner. For example, when the hybrid parallelism manner includes the tensor parallelism manner, the training configuration information further includes a division quantity t of a network layer in the tensor parallelism manner, where t is an integer greater than 1. In this case, each computing node group has at least t computing nodes. For each computing node group and a corresponding pipeline stage, the controller 302 divides a network layer in the pipeline stage into t local network layers based on the division quantity t of the network layer, and allocates the computing nodes in the computing node group to the local network layers. One computing node is allocated to each local network layer. The computing node trains the allocated local network layer. In this way, network layer tensor allocation is completed in the tensor parallelism manner. The computing node group 1 in FIG. 5 is still used as an example. It is assumed that the division quantity t is equal to 2. The controller 302 divides a network layer in the pipeline stage 1 into local network layers 1 and 2 (for example, upper and lower parts of the network layer), and allocates the local network layers 1 and 2 respectively to the GPU 1 and the GPU 2 in the computing node group 1.

In a possible implementation, as shown in FIG. 5A and FIG. 5B, when allocating computing nodes to a network in a pipeline stage in a tensor parallelism manner, the controller 302 allocates computing nodes in a same computing device to local network layers at a same network layer. When performing model training on a network layer in the tensor parallelism manner, the controller 302 synchronizes training information of different local network layers through intra-device tensor model parallelism communication. The training information is, for example, an input tensor and an output tensor (that is, intermediate tensors) of each local network layer. The tensor model parallelism communication is communication through interconnection of computing nodes (for example, NVLink) in a computing device.

When the hybrid parallelism manner does not include the tensor parallelism manner, each computing node group includes one computing node. Certainly, in some other embodiments, when the hybrid parallelism manner includes the tensor parallelism manner, each computing node group may alternatively include a plurality of computing nodes, and the plurality of computing nodes cooperate to complete training of a same pipeline stage.

It should be understood that the foregoing division principles for computing nodes in each data parallelism group and for each copy model are consistent. After the division, each network layer of each copy model is allocated to a computing node. The controller 302 synchronizes each network layer of each copy model to the allocated computing node. In this way, the controller 302 subsequently invokes the computing node to train the network layer in the computing node.

In a possible implementation, as shown in FIG. 1, the controller 302 creates a process 32 for each computing node 312. The process 32 is used to invoke the corresponding computing node 312 during model training, to train a network layer in the computing node 32.

As shown in FIG. 4, the process 32 includes an executor (executor) 321 and a communicator (communicator) 322. The executor 321 and the communicator 322 are configured to collaboratively implement computation-communication full parallelism scheduling in a model training process. The executor 321 is configured to schedule the computing node 312 corresponding to the process 32 to which the executor 321 belongs, to complete a computation task in a model training process. The communicator 322 is configured to provide an interface for communication with the outside for the executor 321, to complete a communication task in the model training process.

As shown in FIG. 4, FIG. 5A, and FIG. 5B, each process corresponds to an NVIDIA collective communication library (NVIDIA collective communication library, NCCL) and a Gloo communication library. The NCCL communication library supports data parallelism communication and tensor parallelism communication, and the Gloo communication library supports pipeline parallelism communication.

The communicator 322 has permission to access the NCCL communication library and the Gloo communication library. FIG. 4 is used as an example. The executor 321 delivers a communication task in the data parallelism manner (DP.sync), a communication task in the pipeline parallelism manner (PP.sync), or a communication task in the tensor parallelism manner (TP.sync) to the communicator 322. The communicator 322 invokes an operation in the NCCL communication library or the Gloo communication library based on the delivered communication task, to complete the delivered communication task. The communication task is a data transmission task in a training process.

In a possible implementation, the controller 302 defines the to-be-trained neural network model by using PyTorch. The process 32 created for the computing node 312 is a PyTorch process. The PyTorch process synchronizes, to a computing node by using a compute unified device architecture (compute unified device architecture, CUDA) interface, a network layer allocated to the computing node, so that the computing node trains the network layer.

With reference to the foregoing parallelism training system, the following describes in detail the model training method based on the hybrid parallelism manner according to this application.

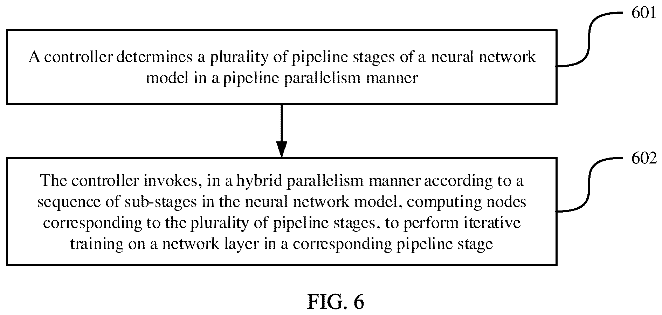

FIG. 6 is a flowchart of a model training method based on a hybrid parallelism manner according to an embodiment of this application. The method is performed by the controller in the foregoing parallelism training system.

When training a target neural network model, the controller duplicates the target neural network model for d times, to obtain d copy models, and allocates each copy model of the target neural network to one data parallelism group. Training of one copy model is completed in each data parallelism group. Because training processes of the copy models are similar, for ease of description, with reference to steps 601 and 602, the following describes a process of training any one copy model in the hybrid parallelism manner.

601: The controller determines a plurality of pipeline stages of a neural network model in a pipeline parallelism manner, where each pipeline stage includes a plurality of sub-stages of the neural network model, sub-stages at same locations in adjacent pipeline stages are consecutive in the neural network model, and each sub-stage includes at least one network layer of the neural network model.

The neural network model is any copy of the target neural network model. Sub-stages in the neural network model are consecutive, and sub-stages in a same pipeline stage are inconsecutive in the neural network model.

In a possible implementation, training configuration information of the target neural network model further includes a quantity of slices and a quantity of pipeline stages of the target neural network model in the pipeline parallelism manner. The controller divides network layers of the neural network model into a plurality of pipeline stages based on the quantity of slices and the quantity of pipeline stages. For example, steps A1 to A3 below are performed.

Step A1: The controller determines a plurality of slices of the neural network model, where each slice includes a plurality of consecutive network layers in the neural network model.

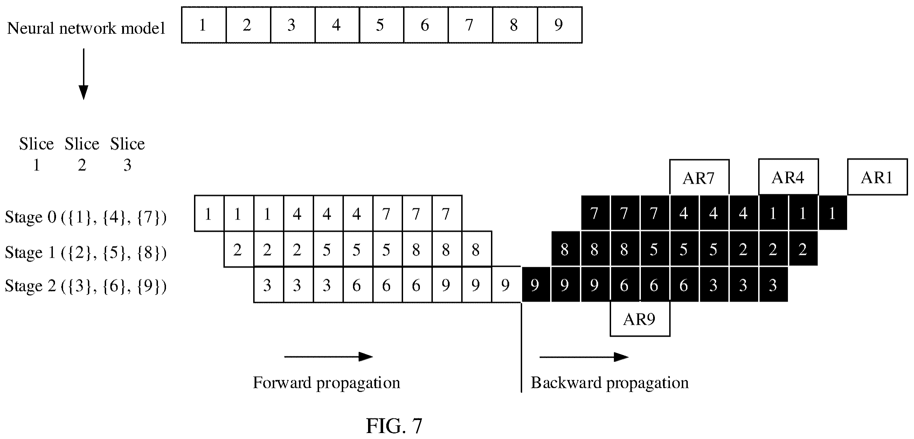

For example, the quantity of slices in the training configuration information is s, and the controller divides the network layers of the neural network model into s slices based on the slice quantity s. For example, FIG. 7 is a diagram of model training in a hybrid parallelism manner according to an embodiment of this application. It is assumed that a neural network model includes network layers 1 to 9, and s=3. The controller divides the neural network model into three slices: slices 1 to 3. Herein, the slice 1 includes the network layers 1 to 3, the slice 2 includes the network layers 4 to 6, and the slice 3 includes the network layers 7 to 9.

Alternatively, before performing step 401, the controller has divided the neural network model into the s slices based on the slice quantity s. When performing step A1, the controller determines the s slices obtained through division as the plurality of slices of the neural network model.

Step A2: The controller partitions each of the plurality of slices, to obtain a plurality of sub-stages of each slice, where network layers in adjacent sub-stages are consecutive.

For example, the quantity of pipeline stages in the training configuration information is p. For any slice, the controller divides the slice into p sub-stages, and network layers in adjacent sub-stages are consecutive. FIG. 7 is still used as an example. It is assumed that p=3. The slice 1 is divided into three sub-stages: {network layer 1}, {network layer 2}, and {network layer 3}. Each sub-stage in FIG. 7 is shown as {network layer number}.

It should be understood that a quantity of network layers in each slice is an integer multiple of the quantity of pipeline stages, so that sub-stages in each slice can be divided into pipeline stages.

Step A3: The controller combines sub-stages at same locations in the plurality of slices to form one pipeline stage.

In a possible implementation, the controller combines i^{th} stages in all of the s slices to form an i^{th} pipeline stage, where i is an integer greater than 0 and less than or equal to p.

FIG. 7 is still used as an example. The controller combines the 1^{st} sub-stage {network layer 1} in the slice 1, the 1^{st} sub-stage {network layer 4} in the slice 2, and the 1^{st} sub-stage {network layer 7} in the slice 3 to form the 1^{st} pipeline stage (that is, a stage 0). By analogy, the 2^{nd} pipeline stage (that is, a stage 1) and the 3^{rd} pipeline stage (that is, a stage 2) are obtained.

In another possible implementation, the training configuration information does not include the slice quantity, but includes the sub-stage quantity r and the pipeline stage quantity p, where r is an integer multiple of p. In this case, the neural network model does not need to be cut into slices, and p pipeline stages of the neural network model are determined based on the sub-stage quantity r and the pipeline stage quantity p. For example, steps B1 and B2 below are performed.

Step B1: The controller divides the neural network model into r sub-stages based on the sub-stage quantity r.

Each sub-stage includes at least one network layer of the neural network model. Adjacent sub-stages are consecutive in the neural network model. When each sub-stage includes a plurality of network layers, network layers in a same sub-stage are consecutive in the neural network model.

For example, it is assumed that the neural network model includes network layers 1 to 8, and r=4. In this case, the controller divides the network layers 1 to 8 into four sub-stages: {network layers 1 and 2}, {network layers 3 and 4}, {network layers 5 and 6}, and {network layers 7 and 8}.

Step B2: The controller sequentially allocates the r sub-stages to the p pipeline stages.

The four sub-stages in step B1 are still used as an example. It is assumed that the pipeline stage quantity p is equal to 2. The controller adds the 1^{st} sub-stage {network layers 1 and 2} to the 1^{st} pipeline stage, adds the 2^{nd} sub-stage {network layers 3 and 4} to the 2^{nd} pipeline stage, adds the 3^{rd} sub-stage {network layers 5 and 6} to the 1^{st} pipeline stage, and adds the 4^{th} sub-stage {network layers 7 and 8} to the 2^{nd} pipeline stage. In other words, the 1^{st} pipeline stage includes {network layers 1 and 2} and {network layers 5 and 6}, and the 2^{nd} pipeline stage includes {network layers 3 and 4} and {network layers 7 and 8}.

In another possible implementation, in a mode configuration phase, the controller has divided the neural network model into a plurality of pipeline stages by using the foregoing steps A1 to A3 or steps B1 and B3. When performing step 601, the controller determines the pipeline stages obtained through division as the plurality of pipeline stages in the pipeline parallelism manner, without the need of division for pipeline stages.

602: The controller invokes, in the hybrid parallelism manner according to a sequence of sub-stages in the neural network model, computing nodes corresponding to the plurality of pipeline stages, to perform iterative training on network layers in the corresponding pipeline stages.

A computing node corresponding to each pipeline stage stores model parameters of each network layer in the corresponding pipeline stage.

The controller performs iterative training on the neural network model for a plurality of times. Iterative training processes are similar. The following describes any iterative training process with reference to the following steps 6021 to 6023. For another iterative training process, refer to this iterative training process.

Step 6021: In any iterative training process, the controller determines a plurality of data batches.

The plurality of data batches are a plurality of micro-batches of a mini-batch allocated to a data parallelism group of the neural network model.

For example, in any iterative training process, the controller obtains a group of data from a data set, divides the group of data into d mini-batches based on a data parallelism group quantity d in a data parallelism manner, and allocates the d mini-batches to d data parallelism groups. One mini-batch is allocated to each data parallelism group. The controller divides a target mini-batch in a plurality of mini-batches into a plurality of micro-batches in the pipeline parallelism manner. The target mini-batch is a mini-batch allocated to a data parallelism group of the neural network model. The plurality of micro-batches are a plurality of data batches.

Step 6022: In any iterative training process, the controller invokes, in the pipeline parallelism manner according to the sequence of the sub-stages in the neural network model, the computing nodes corresponding to the plurality of pipeline stages, and sequentially obtains gradient information of each sub-stage in a corresponding pipeline stage for a plurality of data batches.

From a perspective of the neural network model, the sequence of the sub-stages in the neural network model means a front-to-back forward sequence of the sub-stages in the neural network model and a back-to-front backward sequence of the sub-stages in the neural network model. From a perspective of a pipeline stage, the sequence of the sub-stages in the neural network model means a forward sequence and a backward sequence of sub-stages in the pipeline stage. Network layers in the sub-stages in the forward sequence also follow a forward sequence in the sub-stages, and network layers in the sub-stages in the backward sequence also follow a backward sequence in the sub-stages.

The controller sequentially invokes, based on the sequence of the sub-stages in the neural network model, the computing nodes corresponding to the plurality of pipeline stages, to complete forward propagation and backward propagation of the plurality of data batches in the neural network model. With reference to steps C1 and C2 below, by using any sub-stage in any pipeline stage as an example, the following describes forward propagation and backward propagation processes performed on the sub-stage in sequence.

C1: For any sub-stage in any pipeline stage, each time a forward data batch of the sub-stage is obtained, the controller invokes a first computing node, and performs forward propagation computation on the forward data batch based on model parameters of a network layer in the sub-stage, to obtain a forward computation result of the sub-stage.

The first computing node is a computing node corresponding to a pipeline stage to which the sub-stage belongs. When the sub-stage is the 1^{st} sub-stage of the neural network model, the pipeline stage to which the sub-stage belongs is the 1^{st} pipeline stage in the plurality of pipeline stages. When the sub-stage is the last sub-stage of the neural network model, the pipeline stage to which the sub-stage belongs is the last pipeline stage in the plurality of pipeline stages. When the sub-stage is the 1^{st} sub-stage of the neural network model, the forward data batch is any one of the plurality of data batches determined in step 601. When the sub-stage is not the 1^{st} sub-stage of the neural network model, the forward data batch is a forward computation result of a previous sub-stage of the sub-stage in the neural network model. The sub-stage and the previous sub-stage herein belong to two adjacent pipeline stages. For example, the pipeline stage to which the sub-stage belongs is the 1^{st} pipeline stage, and a pipeline stage to which the previous sub-stage belongs is the last pipeline stage; or the pipeline stage to which the sub-stage belongs is not the 1^{st} pipeline stage, and a pipeline stage to which the previous sub-stage belongs is a previous pipeline stage of the pipeline stage to which the sub-stage belongs. The forward computation result of the sub-stage is an output tensor of the sub-stage in the forward propagation process.

From a perspective of the neural network model, in the forward propagation process, the controller invokes, in parallel according to a forward sequence of the plurality of pipeline stages and a forward sequence of sub-stages in the pipeline stage, the computing nodes corresponding to the plurality of pipeline stages, to implement the forward propagation process of the neural network model for the plurality of data batches.

In a possible implementation, the controller invokes, in parallel according to the forward sequence of sub-stages in the pipeline stage, the computing nodes corresponding to the pipeline stages, performs forward propagation computation based on the 1^{st} sub-stage in each pipeline stage, performs forward propagation computation based on the 2^{nd} sub-stage in each pipeline stage, and so on, until forward computation results for all micro-batches are obtained based on the last sub-stage in the last pipeline stage. The following describes this implementation with reference to steps C11 to C14.

Step C11: The controller sequentially obtains a plurality of data batches from the 1^{st} sub-stage in the 1^{st} pipeline stage, uses the plurality of data batches as a plurality of forward data batches of the 1^{st} sub-stage, and sequentially sends, according to a sequence of the plurality of forward data batches, forward computation tasks for the plurality of forward data batches to a computing node corresponding to the 1^{st} pipeline stage. After receiving the forward computation task, the computing node performs forward propagation computation on a corresponding forward data batch based on model parameters of a network layer of the 1^{st} sub-stage, to obtain a forward computation result of the 1^{st} sub-stage.

The forward computation task is a task of performing forward propagation computation on a forward data batch based on model parameters of a network layer in a sub-stage, or may be understood as a task of performing forward propagation on a forward data batch on a sub-stage.

Step C12: Each time a forward computation result of the 1^{st} sub-stage in the 1^{st} pipeline stage is obtained, the controller uses the forward computation result as a forward data batch of the 1^{st} sub-stage in the 2^{nd} pipeline stage, and sends a forward computation task for the forward data batch to a computing node corresponding to the 2^{nd} pipeline stage. After receiving the forward computation task, the computing node performs forward propagation computation on the forward data batch based on model parameters of a network layer of the 1^{st} sub-stage in the 2^{nd} pipeline stage, to obtain a forward computation result of the 1^{st} sub-stage in the 2^{nd} pipeline stage.

Step C13: If the 2^{nd} pipeline stage is not the last pipeline stage, each time a forward computation result of the 1^{st} sub-stage in the 2^{nd} pipeline stage is obtained, the controller uses the forward computation result as a forward data batch of the 1^{st} sub-stage in a next pipeline stage (that is, the 3^{rd} pipeline stage), obtains a forward computation result of the 1^{st} sub-stage in the next pipeline stage in the processing manner of the sub-stage in step C12, and so on, until a forward computation result of the 1^{st} sub-stage in the last pipeline stage is obtained.

Correspondingly, if the 2^{nd} pipeline stage is the last pipeline stage, the forward computation result of the 1^{st} sub-stage in the 2^{nd} pipeline stage is a forward computation result of the 1^{st} sub-stage in the last pipeline stage.

Step C14: Each time a forward computation result of the 1^{st} sub-stage in the last pipeline stage is obtained, the controller uses the forward computation result as a forward data batch of the 2^{nd} sub-stage in the 1^{st} pipeline stage, obtains a forward computation result of the 2^{nd} sub-stage in each pipeline stage in a processing manner of the 1^{st} sub-stage in each pipeline stage in steps C11 to C13, and so on, until a forward computation result of the last sub-stage in the last pipeline stage is obtained. The forward propagation process of the plurality of data batches in the neural network model ends.

FIG. 7 is used as an example. It is assumed that there are three data batches. In a forward propagation process, the controller sequentially inputs the three data batches into the 1^{st} sub-stage {network layer 1} in the stage 0, to obtain three forward computation results of {network layer 1}. Each time a forward computation result of {network layer 1} is obtained, the controller inputs the forward computation result into the 1^{st} sub-stage {network layer 2} in the stage 1. Initially, {network layer 2} waits for each forward computation result of {network layer 1}. Each time a forward computation result of {network layer 1} is obtained, forward propagation computation is performed on the forward computation result of {network layer 1}, to obtain a forward computation result of {network layer 2}. The forward computation result of {network layer 2} is input into the 1^{st} sub-stage {network layer 3} of the stage 2. Initially, {network layer 3} waits for each forward computation result of {network layer 2}. Each time a forward computation result of {network layer 2} is obtained, forward propagation computation is performed on the forward computation result of {network layer 2}, to obtain a forward computation result of {network layer 3}. The forward computation result of {network layer 3} is input into the 2^{nd} sub-stage {network layer 4} of the stage 0. By analogy, the 2^{nd} sub-stages of the stages 0 to 2 perform forward propagation computation, and the 3^{rd} sub-stages in the stages 0 to 2 perform forward propagation calculation, until three forward computation results of the last sub-stage {network layer 9} of the stage 2 are obtained.

Because fine-grained division is performed on a network layer in a pipeline stage according to sub-stages, and sub-stages at same locations in adjacent pipeline stages are consecutive in the neural network model. In a forward propagation process, each pipeline stage other than the 1^{st} pipeline stage needs to wait for only the 1^{st} forward computation result of the 1^{st} sub-stage in a previous pipeline stage, to start forward propagation computation of a corresponding pipeline stage without waiting for completion of forward propagation of the previous pipeline stage. In this way, a waiting time (that is, an idle time) of a computing node corresponding to each pipeline stage in the forward propagation process is shortened, and utilization of the computing node is improved.

Computing nodes corresponding to a plurality of pipeline stages are located on different computing devices, and computing nodes corresponding to a same pipeline stage are located on a same computing device. In this case, because sub-stages in adjacent pipeline stages are consecutive in the neural network model, in a forward propagation process, for any sub-stage in any pipeline stage, if the sub-stage is not the last sub-stage of the neural network model, the controller synchronizes a forward computation result of a sub-stage in a first computing node to a second computing node through a point-to-point communication operation in a first communication library. The second computing node is a computing node corresponding to a pipeline stage to which a next sub-stage of the sub-stage in the neural network model belongs, so that the second computing node performs a forward propagation process of the next sub-stage.

The first communication library is a Gloo communication library. A point-to-point communication operation in the Gloo communication library includes a point-to-point send (send) operation and a point-to-point receive (recv) operation. The data parallelism group 1 in FIG. 5A and FIG. 5B is used as an example. It is assumed that the data parallelism group 1 is not divided in the tensor parallelism manner. The data parallelism group 1 includes the GPU 1 in the computing device 1 and the GPU 3 in the computing device 2. The GPU 1 is a first computing node, and the GPU 3 is a second computing node. Each time the GPU 1 obtains a forward computation result of a sub-stage in the pipeline stage 1 through computation, the GPU 1 sends the forward computation result to the controller (for example, to a process 1 of the controller). The process 1 uses the forward computation result as a forward data batch of a sub-stage in the pipeline stage 2, and sends, through a point-to-point sending operation in a Gloo communication library, a forward transmission task of the forward data batch to a Gloo communication library (referred to as a first Gloo communication library) corresponding to the GPU 1. The first Gloo communication library receives the forward transmission task through a point-to-point receiving operation, and sends the forward data batch to a Gloo communication library (referred to as a second Gloo communication library) of the GPU 3 through a point-to-point sending operation. The second Gloo communication library receives the forward data batch through a receiving operation, and sends the forward data batch to a process 3. The process 3 delivers the forward computation task for the forward data batch to the GPU 3 by using a CUDA interface. The GPU 3 performs forward propagation computation on the forward data batch based on the sub-stage in the pipeline stage 2 according to the received forward computation task, to obtain a forward computation result of the sub-stage in the pipeline stage 2.

In a forward propagation computation process, a plurality of forward computation results of the last stage in the last pipeline stage are sequentially obtained. The plurality of forward results correspond to different data batches. The plurality of forward results are forward propagation results of the neural network model for the corresponding data batches, that is, predicted labels of the corresponding data batches. Each time a forward computation result of the last stage in the last pipeline stage is obtained, the controller obtains a group of errors between the forward computation result and a real label of a corresponding data batch. If the group of errors does not satisfy an error condition of the neural network model in a training process, the controller uses the group of errors as a to-be-processed backward data batch during backward propagation, and enters a backward propagation process. If a plurality of groups of errors corresponding to the plurality of forward results satisfy the error condition, the training ends.

C2: Each time a backward data batch of any sub-stage is obtained, the controller invokes the first computing node to perform backward propagation computation on the backward data batch based on model parameters of the sub-stage, to obtain a backward computation result of the sub-stage, and obtains gradient information of the sub-stage based on the backward computation result.

When the sub-stage is the last sub-stage of the neural network model, the backward data batch is obtained based on a forward computation result of the sub-stage. For example, the backward data batch is a group of errors between the forward computation result of the sub-stage and a real label of a corresponding data batch. When the sub-stage is not the last sub-stage of the neural network model, the backward data batch is a backward computation result of a next sub-stage of the sub-stage in the neural network model. The sub-stage and the next sub-stage herein belong to two adjacent pipeline stages. For example, the pipeline stage to which the sub-stage belongs is the last pipeline stage, and the pipeline stage to which the next sub-stage belongs is the 1^{st} pipeline stage; or the pipeline stage to which the sub-stage belongs is not the last pipeline stage, and the pipeline stage to which the next sub-stage belongs is a next pipeline stage of the pipeline stage to which the sub-stage belongs. The backward computation result of the sub-stage is an output tensor of the stage in the backward propagation process.

From a perspective of the neural network model, in the backward propagation process, the controller invokes, according to a backward sequence of the plurality of pipeline stages and a backward sequence of sub-stages in the pipeline stage, the computing nodes corresponding to the plurality of pipeline stages, to implement the backward propagation process of the neural network model for the plurality of groups of errors.

In a possible implementation, the controller invokes, in parallel according to the backward sequence of sub-stages in the pipeline stage, the computing nodes corresponding to the pipeline stages, performs backward propagation computation based on the last sub-stage in each pipeline stage, performs backward propagation computation based on the penultimate sub-stage in each pipeline stage, and so on, until the 1^{st} sub-stage in the 1^{st} pipeline stage completes backward propagation computation. The following describes this implementation with reference to steps C21 to C24.

Step C21: From the last sub-stage in the last pipeline stage, the controller sequentially obtains the plurality of groups of errors corresponding to the plurality of data batches. Each time a group of errors is obtained, the controller uses the group of errors as a backward data batch of the last sub-stage, and sends a backward computation task for the backward data batch to a computing node corresponding to the last pipeline stage. After receiving the backward computation task, the computing node performs backward propagation computation on the backward data batch based on model parameters of a network layer of the last sub-stage, to obtain a backward computation result of the last sub-stage; and performs gradient computation on the model parameters of the last sub-stage based on the backward computation result to obtain one piece of gradient information of the last sub-stage.

The backward computation task is a task of performing backward propagation computation on a backward data batch based on model parameters of a network layer in a sub-stage, or may be understood as a task of performing backward propagation on a backward data batch on a sub-stage.

Step C22: Each time a backward computation result of the last sub-stage in the last pipeline stage is obtained, the controller uses the backward computation result as a backward data batch of the last sub-stage in the penultimate pipeline stage, and sends a backward computation task for the backward data batch to a computing node corresponding to the penultimate pipeline stage. After receiving the backward computation task, the computing node performs backward propagation computation on the backward data batch based on model parameters of a network layer of the last sub-stage in the penultimate pipeline stage, to obtain a backward computation result of the last sub-stage in the penultimate pipeline stage; and performs gradient computation on the model parameters of the last sub-stage in the penultimate pipeline stage based on the backward computation result, to obtain one piece of gradient information of the last sub-stage in the penultimate pipeline stage.

Step C23: If the penultimate pipeline stage is not the 1^{st} pipeline stage, each time a backward computation result of the last sub-stage in the penultimate pipeline stage is obtained, the controller uses the backward computation result as a backward data batch of the last sub-stage in a previous pipeline stage (that is, the antepenultimate pipeline stage), obtains gradient information and a backward computation result of the last sub-stage in the previous pipeline stage in the processing manner of the sub-stage in step C22, and so on, until a backward computation result of the last sub-stage in the 1^{st} pipeline stage is obtained.

Correspondingly, if the penultimate pipeline stage is the 1^{st} pipeline stage, the backward computation result of the last sub-stage in the penultimate pipeline stage is a backward computation result of the last sub-stage in the 1^{st} pipeline stage.

Step C24: Each time a backward computation result of the last sub-stage in the 1^{st} pipeline stage is obtained, the controller uses the backward computation result as a backward data batch of the penultimate sub-stage in the last pipeline stage, obtains gradient information and a backward computation result of the penultimate sub-stage in each pipeline stage in a processing manner of the last sub-stage in each pipeline stage in steps C21 to C23, and so on, until a plurality of backward computation results and a plurality of pieces of gradient information of the 1^{st} sub-stage in the 1^{st} pipeline stage are obtained. The backward propagation process of the plurality of groups of errors in the neural network model ends.

FIG. 7 is still used as an example. After three groups of errors are sequentially obtained based on the last sub-stage {network layer 9} in the stage 2, a backward propagation process is performed. Each time the controller obtains a group of errors, the controller inputs the group of errors to {network layer 9} to obtain a backward computation result of {network layer 9}. Each time a backward computation result of {network layer 9} is obtained, one piece of gradient information of {network layer 9} is computed based on the backward computation result, and the backward computation result is input into the last sub-stage {network layer 8} in the stage 1. After completing forward propagation computation, {network layer 8} waits for each backward computation result of {network layer 9}. Each time a backward computation result of {network layer 9} is obtained, backward propagation computation is performed on the backward computation result of {network layer 9}, to obtain a backward computation result of {network layer 8}. One piece of gradient information of {network layer 8} is computed based on the backward computation result, and the backward computation result is input into the last sub-stage {network layer 7} in the stage 0. After completing forward propagation computation, {network layer 7} waits for each backward computation result of {network layer 8}. Each time a backward computation result of {network layer 8} is obtained, backward propagation computation is performed on the backward computation result of {network layer 8}, to obtain a backward computation result of {network layer 7}. Each time a backward computation result of {network layer 7} is obtained, one piece of gradient information of {network layer 7} is computed based on the backward computation result. The backward computation result is synchronized to the penultimate sub-stage {network layer 6} in the stage 2. By analogy, backward propagation computation is performed in the penultimate sub-stages in the stages 0 to 2, and forward propagation computation is performed in the antepenultimate sub-stages in the stages 0 to 2, until three backward computation results and three pieces of gradient information of the antepenultimate sub-stage {network layer 1} in the stage 0 are obtained.

Because fine-grained division is performed on a network layer in a pipeline stage according to sub-stages, and sub-stages at same locations in adjacent pipeline stages are consecutive in the neural network model, in a backward propagation process, a computing node corresponding to each pipeline stage other than the last pipeline stage needs to wait for only the 1^{st} backward computation result of the last sub-stage in a next pipeline stage, to start backward propagation computation of a corresponding pipeline stage without waiting for completion of backward propagation of the next pipeline stage. In this way, a waiting time (that is, an idle time) of a computing node in the backward propagation process is shortened, and utilization of the computing node is improved.

Computing nodes corresponding to a plurality of pipeline stages are located on different computing devices, and computing nodes corresponding to a same pipeline stage are located on a same computing device. In this case, because sub-stages in adjacent pipeline stages are consecutive in the neural network model, in a backward propagation process, for any sub-stage in any pipeline stage, if the sub-stage is not the 1^{st} sub-stage of the neural network model, the controller synchronizes a backward computation result of a sub-stage in a first computing node to a third computing node through a point-to-point communication operation in a first communication library. The third computing node is a computing node corresponding to a pipeline stage to which a previous sub-stage of the sub-stage in the neural network model belongs, so that the third computing node performs a backward propagation process of a backward computation result of the previous sub-stage.

The data parallelism group 1 in FIG. 5A and FIG. 5B is still used as an example. It is assumed that the data parallelism group 1 is not divided in the tensor parallelism manner. The data parallelism group 1 includes the GPU 1 in the computing device 1 and the GPU 3 in the computing device 2. The GPU 3 is a first computing node, and the GPU 1 is a third computing node. Each time the GPU 3 obtains a backward computation result of a sub-stage in the pipeline stage 2 through computation, the GPU 3 sends the backward computation result to the controller (for example, to a process 3 of the controller). The process 3 uses the backward computation result as a backward data batch of a sub-stage in the pipeline stage 1, and sends, through a point-to-point sending operation in a Gloo communication library, a backward transmission task of the backward data batch to a Gloo communication library (referred to as a first Gloo communication library) corresponding to the GPU 3. The first Gloo communication library receives the backward transmission task through a receiving operation, and sends the backward data batch to a Gloo communication library (referred to as a third Gloo communication library) of the GPU 1 through a point-to-point sending operation. The third Gloo communication library receives the backward data batch through a point-to-point receiving operation, and sends the backward data batch to a process 1. The process 1 delivers the backward computation task for the backward data batch to the GPU 1 by using a CUDA interface. The GPU 1 performs backward propagation computation on the backward data batch based on the sub-stage in the pipeline stage 1 according to the received backward computation task, to obtain a backward computation result of the sub-stage in the pipeline stage 1 and obtain gradient information of the sub-stage in the pipeline stage 1 based on the backward computation result of the sub-stage in the pipeline stage 1.

Step 6023: The controller updates, in the data parallelism manner, model parameters of a network layer in one sub-stage based on gradient information of the sub-stage for the plurality of data batches, each time the gradient information of the sub-stage for the plurality of data batches is obtained.

The neural network model is a copy of the target neural network model, and the target neural network model has a plurality of copies. After forward propagation computation and backward propagation computation for a plurality of data batches are completed for the copy, each sub-stage in the copy has a plurality of pieces of gradient information, and each piece of gradient information corresponds to one data batch.

When the target neural network model is trained in the data parallelism manner, a plurality of data parallelism groups train copy models of the target neural network model in parallel, and any data parallelism group obtains a plurality of pieces of gradient information of any sub-stage in the copy model through computation. Correspondingly, another data parallelism group also synchronously obtains a plurality of pieces of gradient information of an entire sub-stage through computation. On this basis, in the data parallelism manner, each time the controller obtains the gradient information of the sub-stage in the plurality of copies for the plurality of data batches, the controller sums up the gradient information of the sub-stage in the plurality of copies for the plurality of data batches to obtain total gradient information of the sub-stage, and updates the model parameters of the sub-stage based on the total gradient information.

FIG. 7 is still used as an example. It is assumed that the target neural network model has two copy models, and gradient information of the sub-stages {network layer 9} in the two copy models is simultaneously computed by computing nodes in different data parallelism groups. Once computation of three pieces of gradient information of {network layer 9} in the two copy models is completed, six pieces of gradient information of {network layer 9} are obtained, and the six pieces of gradient information are summed up to obtain total gradient information AR9 of {network layer 9}. In this way, model parameters of {network layer 9} in the two copy models may be updated based on the total gradient information of AR9. AR7, AR4, and AR1 in FIG. 7 are respectively total gradient information of the sub-stage {network layer 7}, the sub-stage {network layer 4}, and the sub-stage {network layer 1}. For a manner of obtaining AR7, AR4, and AR1, refer to AR9. Details are not described herein.

Because fine-grained division is performed on a network layer in a pipeline stage, and sub-stages at same locations in adjacent pipeline stages are consecutive in the neural network model, during gradient update, a computing node of each pipeline stage other than the last pipeline stage does not need to wait for completion of backward propagation of a next pipeline stage, and only needs to wait for the last sub-stage in an adjacent pipeline stage to complete backward propagation for a data batch. In this way, a gradient update process of each sub-stage in a corresponding pipeline stage can be started, to shorten a waiting time (that is, an idle time) of the computing node and improve utilization of the computing node.

Because different copy models are located in different data parallelism groups, each time the gradient information of the sub-stage in the plurality of copy models for the plurality of data batches is obtained, the controller sums up the gradient information of the sub-stage in the plurality of copies (that is, the copy models) for the plurality of data batches through an AllReduce operation in a second communication library to obtain total gradient information of the sub-stage, and updates the model parameters of the network layer in the sub-stage to implement cross-device data parallelism communication. The second communication library is, for example, an NCCL communication library.

In a possible implementation, for any sub-stage of the target neural network model, a computing node on which the sub-stage in the plurality of data parallelism groups is located is referred to as a target computing node. In other words, there are a plurality of target computing nodes. Starting from the 1^{st} target computing node according to a sequence of the plurality of target computing nodes (that is, a sequence of the plurality of data parallelism groups), the controller synchronizes a plurality of pieces of gradient information of a sub-stage in the 1^{st} target computing node to the 2^{nd} target computing node through an AllReduce operation in an NCCL communication library, sums up the plurality of pieces of gradient information of the sub-stage in the 1^{st} target computing node and a plurality of pieces of gradient information of the sub-stage in the 2^{nd} target computing node to obtain a summation result, synchronizes the summation result to the 3^{rd} target computing node, sums up the summation result and a plurality of pieces of gradient information of the sub-stage in the 3^{rd} target computing node to obtain a new summation result, and so on, until a summation result obtained on the last target computing node is total gradient information of the sub-stage. On the last target computing node, model parameters of the sub-stage are updated based on the total gradient information of the sub-stage, and updated model parameters are synchronized to the sub-stage on the plurality of target computing nodes.

FIG. 5A and FIG. 5B are used as an example. It is assumed that the computing nodes are not divided in the tensor parallelism manner. The data parallelism group 1 includes the GPU 2 in the computing device 1 and the GPU 4 in the computing device 2. The data parallelism group 2 includes the GPU 6 in the computing device 3 and the GPU 8 in the computing device 4. Each data parallelism group has three data batches. A specific sub-stage in the pipeline stage 1 is used as an example. The GPU 2 obtains three pieces of gradient information of the sub-stage for three data batches through computation, and sends the three pieces of gradient information to the controller (for example, to the process 2 of the controller). The process 2 sends, through an AllReduce operation in an NCCL communication library corresponding to the GPU 2, the three pieces of gradient information to an NCCL communication library corresponding to the GPU 6. The NCCL communication library corresponding to the GPU 6 sends the three pieces of gradient information to a process 6. The process 6 sends, to the GPU 6, the three pieces of gradient information and three pieces that are of gradient information of the sub-stage and that are computed by the GPU 6. The GPU 6 sums up the six pieces of gradient information of the sub-stage to obtain total gradient information of the sub-stage, updates model parameters of the sub-stage based on the total gradient information, and returns updated model parameters to the process 6. The process 6 synchronizes the updated model parameters to the process 2. The process 6 and the process 2 use the updated model parameters as latest model parameters of the sub-stage.

After the model parameters of the sub-stages of the copy models are updated, if training for the target neural network model is not completed, the controller obtains a group of data from a dataset, divides the newly obtained group of data into a plurality of mini-batches, and allocates the plurality of mini-batches to the data parallelism groups of the copy models. For any copy model, the computing nodes corresponding to the plurality of pipeline stages are invoked in the hybrid parallelism manner according to a sequence of the sub-stages in the copy model based on a mini-batch, to perform a next time of iterative training on network layers in the corresponding pipeline stages, until training for the target neural network model is completed.

In this method provided in the embodiment shown in FIG. 6, the computing nodes corresponding to the plurality of pipeline stages are invoked in the hybrid parallelism manner according to the sequence of the sub-stages in the neural network model. When iterative training is performed on the network layer in the corresponding pipeline stage, because the sub-stages at the same locations in the adjacent pipeline stages are consecutive in the neural network model, the computing node does not need to wait for completion of forward propagation of a previous pipeline stage, and can perform forward propagation on the corresponding pipeline stage only after forward propagation of the 1^{st} sub-stage in the previous pipeline stage is completed. This reduces idle duration of the computing node in a training process, and improves utilization of the computing node.

In the embodiment shown in FIG. 6, a process of one time of iterative training for a neural network model is described from a perspective of the neural network model. The following describes a process of one time of iterative training for a neural network model from a perspective of pipeline stages.

For example, the controller creates a process for each computing node in a computing cluster. In each iterative training process, each process is used to invoke a corresponding computing node, to train a pipeline stage corresponding to the computing node.

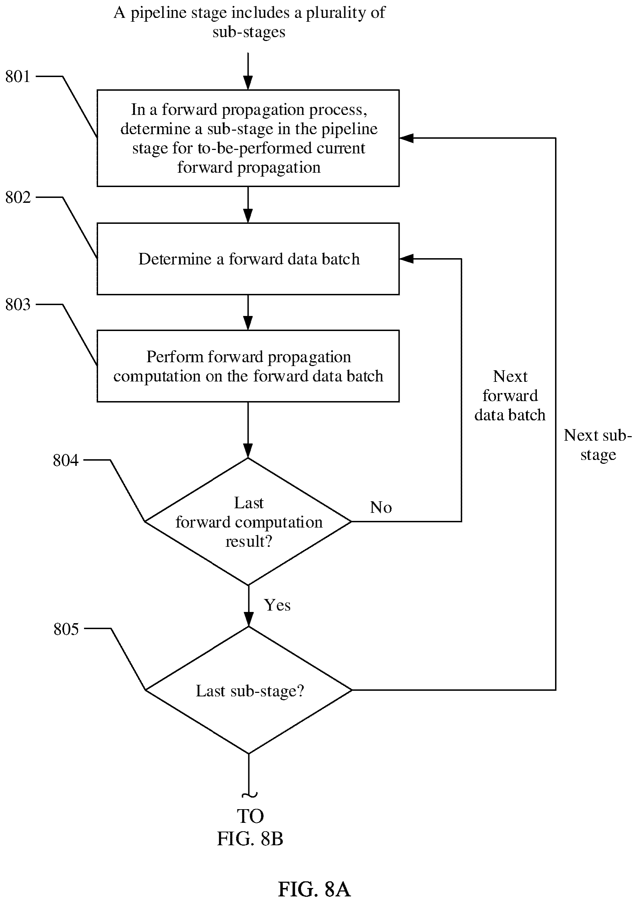

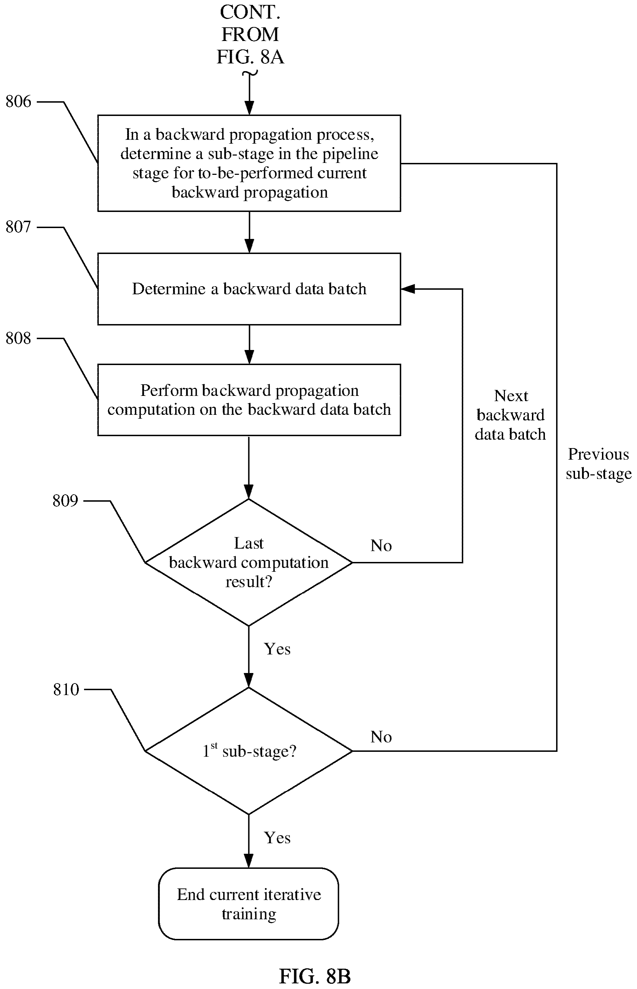

FIG. 8A and FIG. 8B are a flowchart of training a pipeline stage by a process according to an embodiment of this application. This process includes the following steps.

801: In a forward propagation process, a first process determines, according to a front-to-back sequence of sub-stages in a corresponding pipeline stage, a sub-stage in the pipeline stage for to-be-performed current forward propagation.

The pipeline stage is any of a plurality of pipeline stages. The first process is a process allocated by a controller to a computing node corresponding to the pipeline stage, and may also be understood as a process allocated (or created) by the controller to the pipeline stage.

In any iterative training process, if the first process performs step 801 for the first time, the 1^{st} sub-stage in a corresponding pipeline stage is used as a sub-stage for to-be-performed current forward propagation.

If the first process does not perform step 801 for the first time, a next stage of a sub-stage for previous forward propagation in a corresponding pipeline stage is used as a sub-stage for to-be-performed current forward propagation. The stage 0 in FIG. 7 is still used as an example. If a sub-stage for previous forward propagation in the stage 0 is the sub-stage {network layer 1}, the sub-stage {network layer 4} in the stage 0 is used as a sub-stage for to-be-performed current forward propagation.

In another possible implementation, when the first process includes an executor, step 801 is performed by the executor.

802: The first process determines a forward data batch of the sub-stage.

If the sub-stage is the 1^{st} sub-stage of a neural network model, the forward data batch is one of a plurality of data batches.

If the pipeline stage is not the 1^{st} sub-stage of a neural network model, the forward data batch is a forward computation result of a previous sub-stage of the sub-stage in the neural network model. For example, the first process obtains a forward computation result of the previous sub-stage computed by a second process; and each time a forward computation result of the previous sub-stage is obtained, the forward computation result is used as a forward data batch of the sub-stage. The second process is a process corresponding to a pipeline stage to which the previous sub-stage belongs.

In another possible implementation, when the first process includes an executor, step 802 is performed by the executor.

803: The first process invokes a corresponding computing node to perform forward propagation computation on the forward data batch based on model parameters of a network layer in the sub-stage, to obtain a forward computation result of the sub-stage.

For example, the first process delivers a forward computation task for the forward data batch to the corresponding computing node, and the computing node performs forward propagation computation on the forward data batch according to an indication of the forward computation task based on the model parameters of the network layer in the sub-stage.

In a possible implementation, step 803 is completed by the executor in the first process. For example, the executor sends, by using a CUDA interface, the forward computation task to the computing node corresponding to the first process, and the computing node performs step 803 based on the forward computation task, to return the forward computation result to the first process along an original path.

If the sub-stage is not the last sub-stage of the neural network model, after receiving the forward computation result, the executor further delivers a forward transmission task for the forward computation result to a communicator. The communicator sends the forward computation result to a third process through a point-to-point communication operation in a Gloo communication library based on the forward transmission task. The third process uses the forward computation result as a forward data batch to perform forward propagation computation in a sub-stage of a corresponding pipeline stage. The forward transmission task is a communication task in a pipeline parallelism manner.

804: If the forward computation result is not the last forward computation result of the sub-stage, the first process jumps to step 802 for a next forward data batch of the sub-stage, and proceeds to step 805 when the forward computation result obtained in step 804 is the last forward computation result of the sub-stage.

The last forward computation result corresponds to the last data batch in the plurality of data batches.

805: If the sub-stage is not the last sub-stage in the pipeline stage, the first process jumps to step 801 for a next sub-stage in the corresponding pipeline stage. Forward propagation computation for the pipeline stage is completed when the last sub-stage in the pipeline stage completes forward propagation computation for all the data batches.

806: In a backward propagation process, the first process determines, according to a back-to-front sequence of the sub-stages in the pipeline stage, a sub-stage in the corresponding pipeline stage for to-be-performed current backward propagation.

In any iterative training process, if the first process performs step 806 for the first time, the last sub-stage in the corresponding pipeline stage is used as a sub-stage for to-be-performed current backward propagation.

If the first process does not perform step 806 for the first time, a previous sub-stage of a sub-stage for previous backward propagation in the corresponding pipeline stage is used as a sub-stage for to-be-performed current backward propagation. The stage 1 in FIG. 7 is still used as an example. If a sub-stage for previous backward propagation in the stage 1 is the sub-stage {network layer 8}, the sub-stage {network layer 5} in the stage 1 is used as a sub-stage for to-be-performed current backward propagation.

In another possible implementation, when the first process includes the executor, step 806 is performed by the executor.

807: The first process determines a backward data batch of the sub-stage.

If the sub-stage is the last sub-stage of the neural network model, the backward data batch is a group of errors between a forward computation result of the sub-stage and a real label.

If the sub-stage is not the last sub-stage of the neural network model, the backward data batch is a backward computation result of a next sub-stage of the sub-stage in the neural network model. For example, the process obtains a backward computation result of the next sub-stage computed by a third process; and each time a backward computation result of the next sub-stage is obtained, the backward computation result is used as a backward data batch of the sub-stage.

In another possible implementation, when the first process includes the executor, step 807 is performed by the executor.

808: The first process invokes a corresponding computing node to perform backward propagation computation on the backward data batch based on model parameters of a network layer in the sub-stage, to obtain a backward computation result of the sub-stage, and obtains a piece of gradient information of the sub-stage based on the backward computation result.

For example, the first process delivers a backward computation task for the backward data batch to the corresponding computing node, and the computing node performs backward propagation computation on the backward data batch according to an indication of the backward computation task based on the model parameters of the network layer in the sub-stage.

In a possible implementation, step 808 is completed by the executor in the first process. For example, the executor sends, by using the CUDA interface, the backward computation task to the computing node corresponding to the first process, and the computing node performs step 808 based on the backward computation task, to return the computed backward computation result and the computed gradient information to the first process along an original path.

If the sub-stage is not the 1^{st} sub-stage of the neural network model, after receiving the backward computation result returned by the computing node, the executor delivers a backward transmission task for the backward computation result to the communicator. The communicator sends the backward computation result to the second process through a point-to-point communication operation in the Gloo communication library based on the backward transmission task. The second process uses the backward computation result as the backward data batch to perform forward propagation computation in the sub-stage of the corresponding pipeline stage. The backward transmission task is a communication task in the pipeline parallelism manner.

809: If the backward computation result is not the last backward computation result of the sub-stage, the first process jumps to step 807 for a next backward data batch of the sub-stage, and proceeds to step 810 when the backward computation result obtained in step 808 is the last backward computation result of the sub-stage.

The last backward computation result corresponds to the last data batch in the plurality of data batches.

810: If the sub-stage is not the 1^{st} sub-stage in the pipeline stage, the first process jumps to step 806 for a previous sub-stage in the corresponding pipeline stage. Backward propagation computation for the pipeline stage is completed when the 1^{st} sub-stage in the pipeline stage completes backward propagation computation for all the data batches. The iterative training process ends.

In a possible implementation, the first process further detects whether the sub-stage completes backward propagation for all the data batches. If the sub-stage completes backward propagation for all the backward data batches, data parallelism communication for the sub-stage is enabled. In other words, a plurality of pieces of gradient information of the sub-stage are synchronized to another data parallelism group, and the gradient information of the sub-stage is summed up until total gradient information of the sub-stage is obtained. The model parameters of the sub-stage are updated based on the total gradient information.

FIG. 5A and FIG. 5B are used as an example. It is assumed that computing nodes are not divided in a tensor parallelism manner. The data parallelism group 1 includes the GPU 2 in the computing device 1 and the GPU 4 in the computing device 2. The data parallelism group 2 includes the GPU 6 in the computing device 3 and the GPU 8 in the computing device 4. Each data parallelism group has three data batches. A sub-stage 1 in a pipeline stage 1 is used as an example. A process 2 corresponding to the GPU 2 detects whether the stage 1 obtains three pieces of gradient information for three data batches. If the three pieces of gradient information are obtained, the process 2 sends, through an AllReduce operation in an NCCL communication library corresponding to the GPU 2, the three pieces of gradient information to an NCCL communication library corresponding to the GPU 6. The NCCL communication library corresponding to the GPU 6 sends the three pieces of gradient information to a process 6 corresponding to the GPU 6. The process 6 sends a summation task to the GPU 6 by using a CUDA interface. The summation task indicates to perform summation on the three pieces of gradient information and other three pieces of gradient information that are of the stage 1 and that are computed by the GPU 6. If the data parallelism group 2 is the last data parallelism group, the summation task further indicates to update model parameters of the stage 1 based on a summation result. Correspondingly, after completing the summation task, the GPU 6 returns updated model parameters of the stage 1 to a process 2 along an original path. The process 2 synchronizes the updated model parameters to a process 1. The process 2 and the process 1 update model parameters of the stage 1 that correspond to the process 2 and the process 1.

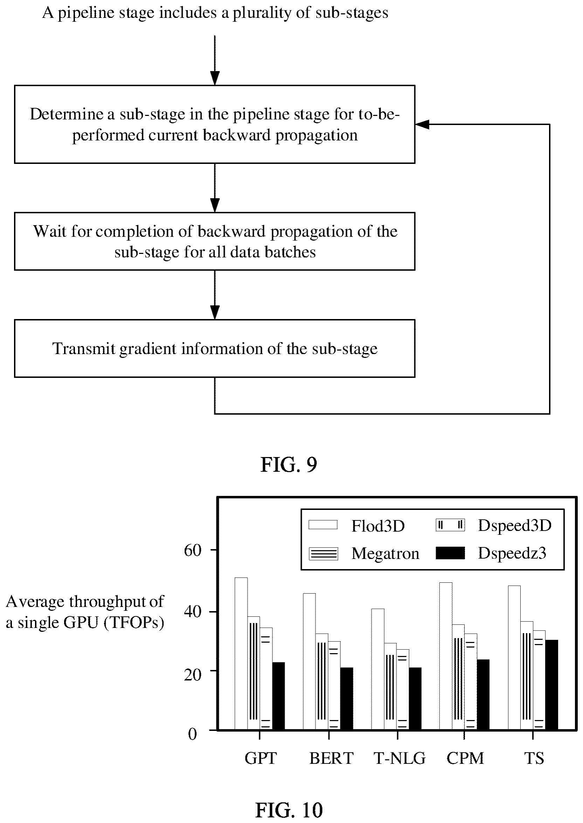

In a possible implementation, the first process detects whether the sub-stage completes backward propagation for all the data batches. If the sub-stage completes backward propagation for all the backward data batches, a process of data parallelism communication for the sub-stage is enabled, and is executed by the communicator in the first process. For example, FIG. 9 is a working flowchart of a communicator according to an embodiment of this application. For a pipeline stage corresponding to a process in which a communicator is located, a sub-stage of current backward propagation in the pipeline stage is determined. After the sub-stage completes backward propagation for all data batches, all gradient information of the sub-stage is transmitted to another data parallelism group, and a previous sub-stage of the sub-stage in the pipeline stage is determined as a sub-stage of current backward propagation, until transmission of all gradient information of the 1^{st} sub-stage in the pipeline stage is completed.

In the method provided in the embodiment shown in FIG. 8A and FIG. 8B, in addition to the effect achieved in FIG. 6, in a training process, one process is created for each of a plurality of pipeline stages of a neural network model. Each process is responsible for scheduling a corresponding computing node to complete training for one pipeline stage. A plurality of processes work in parallel. In this way, a plurality of sub-stages in different pipeline stages can be simultaneously trained, thereby reducing training duration in each iterative training process.

The embodiments shown in FIG. 6, FIG. 8A, and FIG. 8B are all described by using a hybrid parallelism manner as an example. In some other embodiments, the hybrid parallelism manner further includes a tensor parallelism manner. Correspondingly, a computing node group corresponding to each pipeline stage of a neural network model includes a plurality of computing nodes, sub-stages of each pipeline stage are divided into a plurality of parts (that is, local network layers), and the plurality of parts are allocated to the computing nodes in the node group. In forward propagation and back propagation processes, for a network layer, a process synchronously outputs a tensor through an AllReduce operation in an NCLL communication library. The output tensor is used as an input tensor of a next network layer.

The data parallelism group 1 in FIG. 5A and FIG. 5B is still used as an example. It is assumed that after the data parallelism group 1 is divided in a tensor parallelism manner, the GPU 1 allocates a local network layer 1 of each network of a sub-stage in a pipeline stage 1, and the CPU 2 allocates a local network layer 2 of each network layer of the sub-stage in the pipeline stage 1. In a forward propagation process, for any network layer other than the last network layer in the sub-stage, the process 1 computes a forward computation result (that is, a local computation result 1) of a local network layer 1 of the network layer, and the process 2 computes a forward computation result (that is, a local computation result 2) of a local network layer 2 of the network layer. The process 1 sends, by invoking an AllReduce operation in an NCCL communication library, the local computation result 1 to an NCCL communication library corresponding to the process 2. The NCCL communication library corresponding to the process 2 sends the local computation result 1 to the process 2. The process 2 sums up the local computation result 1 and the local computation result 2 by using the GPU 2, to obtain a local computation result 3; and returns the local computation result 3 to the process 1. The process 1 uses the local computation result 3 as an input vector of a local network layer 1 of a next network layer, and continues to perform forward propagation computation. The process 2 uses the local computation result 3 as an input vector of a local network layer 2 of a next network layer, and continues to perform forward propagation computation. In a similar manner, in the backward propagation process, the process 1 synchronizes a local backward computation result and local gradient information of the local network layer 1 to the process 2 by invoking an AllReduce operation in the NCCL communication library.

To further reflect beneficial effects achieved by using the model training method based on the hybrid parallelism manner according to this application, FIG. 10 to FIG. 12 show comparison of different performance between a baseline system and a parallelism training system in this application.

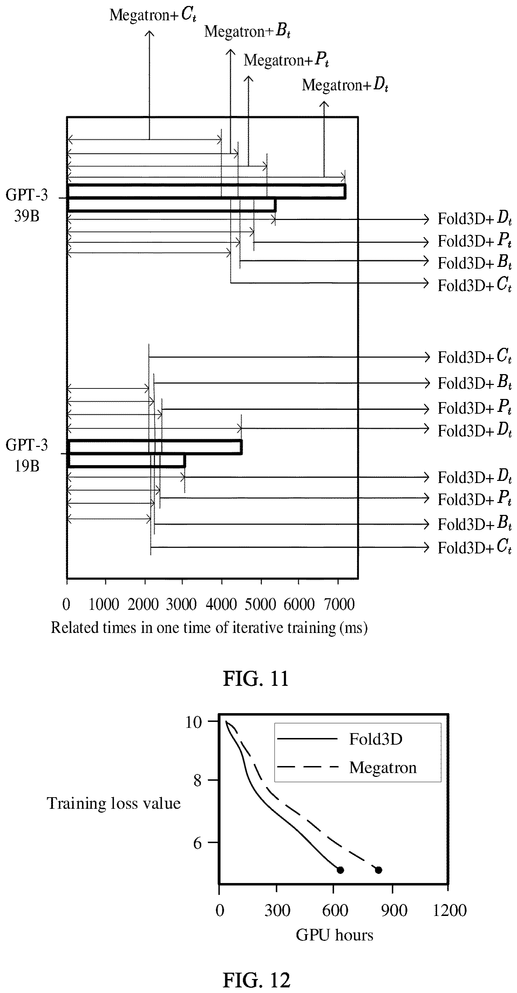

FIG. 10 is a diagram of throughput comparison between a baseline system and a parallelism training system according to an embodiment of this application. As shown in FIG. 10, the baseline system includes training multi-billion parameter language models using model parallelism (training multi-billion parameter language models using model parallelism, Megatron-LM), a three-dimensional deep learning optimization library (DeepSpeed 3D, Dspeed3D), and a deep learning optimization library based on a third-generation zero redundancy optimizer (DeepSpeed ZeRO3, Dspeedz3). Megatron-LM is briefly referred to as Megatron in FIG. 10 and FIG. 11. When the hybrid parallelism manner includes the tensor parallelism manner, the parallelism training system in this application is represented by Flod3D in FIG. 10 to FIG. 12. Four neural network models, namely, a general pre-training (general pre-training, GPT) language model, a transformer-based deep bidirectional language representation model (bidirectional encoder representations from Transformers, BERT), a Turing natural language generation (Turing-NLG, T-NLC) model, and a transformer (Transformer, TS) model all use stacking results. FIG. 10 shows comparison of an average throughput (throughput) of a single GPU when the four neural network models are trained by separately using the four training systems: Megatron-LM, Dspeed3D, Dspeedz3, and Flod3D. A unit of the average throughput is floating-point operations per second (floating-point operations per second, TFOPs). It can be learned from FIG. 10 that when different neural network models are trained, compared with the baseline system, the parallel training system provided in this application greatly improves a throughput and can achieve higher GPU utilization.

FIG. 11 is a diagram of time comparison between a baseline system and a parallelism training system in one time of iterative training according to an embodiment of this application. FIG. 11 shows a computation execution time, an idle (Bubble) time, a pipeline parallelism communication time, and a data parallelism communication time of blocking computation of a GPU in one iterative training process when model training is performed on a GPT-3 39B model and a GPT-3 19B model by using baseline systems Megatron-LM and Flod3D. It can be learned from FIG. 11 that a reason why the parallel training system provided in this application can improve a throughput is mainly that the data parallelism communication time of blocking computation is reduced. In the parallel training system provided in this application, a model is divided into a plurality of sub-stages, and the pipeline stage is divided based on the sub-stages, so that most data parallelism data communication can overlap CPU computation, thereby reducing the data parallelism communication time of blocking computation.

FIG. 12 is a diagram of comparison between training loss (training loss) values of a baseline system and a parallelism training system according to an embodiment of this application. It can be learned from FIG. 12 that, in a process in which iterative training is performed on a same neural network model by using baseline systems Megatron-LM and Flod3D, when the baseline systems Megatron-LM and Flod3D implement convergence to a same training loss value, fewer GPU hours (hours) are consumed in Flod3D, that is, a shorter time is taken in Flod3D. A reason why a shorter time is taken in Flod3D is that Flod3D can improve GPU utilization in a model training process.

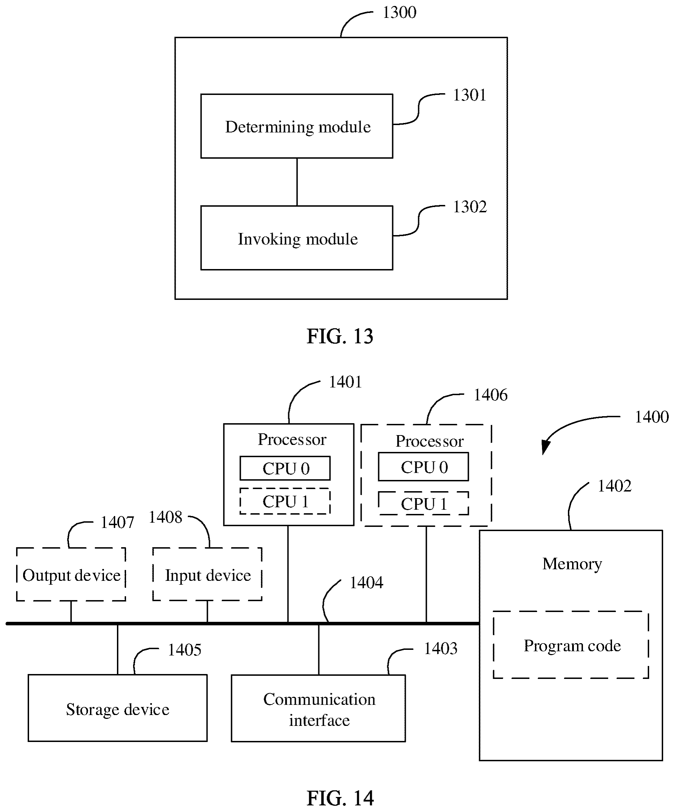

The method in embodiments of this application is described above. An apparatus in embodiments of this application is described below. It should be understood that the apparatus described below has any function of the controller in the foregoing method. The data transmission method according to embodiments of this application is described above in detail with reference to FIG. 3 to FIG. 9. Based on a same inventive concept, the following describes a model training apparatus based on a hybrid parallelism manner according to an embodiment of this application with reference to FIG. 13 and FIG. 14. It should be understood that the technical features described in the method embodiments are also applicable to the following apparatus embodiments.

FIG. 13 is a diagram of a structure of a model training apparatus based on a hybrid parallelism manner according to an embodiment of this application. The hybrid parallelism manner includes a data parallelism manner and a pipeline parallelism manner. The apparatus 1300 shown in FIG. 13 may be a part of the controller or the controller in the foregoing embodiments, and is configured to perform the method performed by the controller. The apparatus 1300 includes:
a determining module 1301, configured to determine a plurality of pipeline stages of the neural network model in the pipeline parallelism manner, where each pipeline stage includes a plurality of sub-stages of the neural network model, sub-stages at same locations in adjacent pipeline stages are consecutive in the neural network model, and the sub-stage includes at least one network layer of the neural network model; and
an invoking module 1302, configured to invoke, in the hybrid parallelism manner according to a sequence of sub-stages in the neural network model, computing nodes corresponding to the plurality of pipeline stages, to perform iterative training on network layers in the corresponding pipeline stages.

In a possible implementation, the determining module 1301 is configured to:
determine a plurality of slices of the neural network model, where each slice includes a plurality of consecutive network layers in the neural network model;
partition each of the plurality of slices, to obtain a plurality of sub-stages of each slice, where network layers in adjacent sub-stages are consecutive; and
combine sub-stages at same locations in the plurality of slices to form a pipeline stage.

In a possible implementation, the invoking module 1302 includes:
an invoking unit, configured to: in any iterative training process, invoke, in the pipeline parallelism manner according to the sequence of the sub-stages in the neural network model, the computing nodes corresponding to the plurality of pipeline stages, and sequentially obtain gradient information of each sub-stage in a corresponding pipeline stage for a plurality of data batches; and
an update unit, configured to update, in the data parallelism manner, model parameters of a network layer in one sub-stage based on gradient information of the sub-stage for the plurality of data batches, each time the gradient information of the sub-stage for the plurality of data batches is obtained.

In a possible implementation, the invoking unit is configured to:
for any sub-stage in any pipeline stage, each time a forward data batch of the sub-stage is obtained, invoke a first computing node, and perform forward propagation computation on the forward data batch based on model parameters of a network layer in the sub-stage, to obtain a forward computation result of the sub-stage, where the first computing node is a computing node corresponding to the pipeline stage, and the forward data batch is any data batch in the plurality of data batches when the sub-stage is the 1^{st} sub-stage of the neural network model, or the forward data batch is a forward computation result of a previous sub-stage of the sub-stage in the neural network model when the sub-stage is not the 1^{st} sub-stage; and
each time a backward data batch of the sub-stage is obtained, invoke the first computing node, perform backward propagation computation on the backward data batch based on the model parameters of the sub-stage to obtain a backward computation result of the sub-stage, and obtain gradient information of the sub-stage based on the backward computation result, where the backward data batch is obtained based on the forward computation result of the sub-stage when the sub-stage is the last sub-stage of the neural network model, or the backward data batch is a backward computation result of a next sub-stage of the sub-stage in the neural network model when the sub-stage is not the last sub-stage.

In a possible implementation, the computing nodes corresponding to the plurality of pipeline stages are located on different computing devices, computing nodes corresponding to a same pipeline stage are located on a same computing device, and the apparatus 1300 further includes:
a synchronization module, configured to: if the sub-stage is not the last sub-stage of the neural network model, synchronize the forward computation result of the sub-stage in the first computing node to a second computing node through a point-to-point communication operation in a first communication library, where the second computing node is a computing node corresponding to a pipeline stage to which the next sub-stage of the sub-stage in the neural network model belongs.

The synchronization module is further configured to: if the sub-stage is not the 1^{st} sub-stage of the neural network model, synchronize the backward computation result of the sub-stage in the first computing node to a third computing node through the communication operation. The third computing node is a computing node corresponding to a pipeline stage to which the previous sub-stage of the sub-stage in the neural network model belongs.

In a possible implementation, the neural network model is a copy of a target neural network model, and the target neural network model has a plurality of copies. The update unit is configured to:
each time the gradient information of the sub-stage in the plurality of copies for the plurality of data batches is obtained, sum up the gradient information of the sub-stage in the plurality of copies for the plurality of data batches through an all-reduce operation in a second communication library to obtain total gradient information of the sub-stage, and update the model parameters of the network layer in the sub-stage based on the total gradient information.

It should be understood that the apparatus 1300 corresponds to the controller in the foregoing method embodiments, and the modules in the apparatus 1300 and the foregoing other operations and/or functions are respectively for implementing the steps and methods implemented by the controller in the method embodiments. For specific details, refer to the foregoing method embodiments. For brevity, details are not described herein again.

It should be understood that when the apparatus 1300 trains a neural network model, division into the foregoing functional modules is merely used as an example for description. In actual application, the foregoing functions may be allocated to different functional modules for implementation as required. In other words, an internal structure of the apparatus 1300 is divided into different functional modules to implement all or a part of the functions described above. In addition, the apparatus 1300 provided in the foregoing embodiment and the foregoing method embodiments pertain to a same concept. For a specific implementation process, refer to the foregoing method embodiments. Details are not described herein again.

FIG. 14 is a diagram of a structure of a control device according to this application. As shown in FIG. 14, the control device 1400 is configured as the controller in the foregoing method embodiments. The control device 1400 includes a processor 1401, a memory 1402, a communication interface 1403, a bus 1404, and a storage device 1405. The processor 1401, the memory 1402, the communication interface 1403, and the storage device 1405 communicate with each other through the bus 1404, or may implement communication by using another means such as wireless transmission.

For example, the processor 1401 may include one or more CPUs, for example, a CPU 0 and a CPU 1 shown in FIG. 14.

For example, the control device 1400 may include a plurality of processors, for example, a processor 1401 and a processor 1406 shown in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

The memory 1402 is configured to store instructions, and the processor 1401 is configured to execute the instructions stored in the memory 1402. The memory 1402 stores program code, and the processor 1401 may invoke the program code stored in the memory 1402 to perform the steps provided in the model training method based on the hybrid parallelism manner.

The memory 1402 may include a read-only memory and a random access memory, and provide instructions and data for the processor 1401. The memory 1402 may further include a non-volatile random access memory. For example, the memory 1402 may further store information of a device type. Alternatively, the memory 1402 may be a volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 1403 uses any apparatus such as a transceiver, and is configured to communicate with another device or a communication network. The communication interface 1404 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

The bus 1404 is configured to transmit information between the foregoing components. In addition to a communication bus, the bus 1404 may further include a power bus, a status signal bus, and the like. However, for clear description, various types of buses in the figure are marked as the bus 1404. The communication bus may be classified into an address bus, a data bus, a control bus, and the like. For example, the communication bus may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), or a cache coherent interconnect for accelerators (cache coherent interconnect for accelerators, CCIX).

The storage device 1405 may be a ROM or another type of static storage device that can store static information and instructions, or may be a RAM or another type of dynamic storage device that can store information and instructions, or may be an EEPROM, a compact disc read-only memory (compact disc read-only memory, CD-ROM) or another optical disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by the processor 1401. The storage device includes at least one memory 1402, but is not limited thereto. The storage device 1405 may exist independently, and is connected to the processor 1401 through the bus 1404. Alternatively, the storage device 1405 may be integrated with the processor 1401.

For example, at least one of the memory 1402 and the storage device 1405 may store program code used to implement the model training method based on the hybrid parallelism manner in this application. The processor 1401 reads and runs the program code, so that the control device 1400 implements the model training method based on the hybrid parallelism manner in this application.

In some embodiments, the control device 1400 may further include an output device 1407 and an input device 1408. The output device 1407 communicates with the processor 1401, and may display information in a plurality of manners. For example, the output device 1407 may be a liquid crystal display (liquid crystal display, LCD), a light emitting diode (light emitting diode, LED) display device, a cathode ray tube (cathode ray tube, CRT) display device, or a projector (projector). The input device 1408 communicates with the processor 1401, and may receive input of a user in a plurality of manners. For example, the input device 1408 may be a mouse, a keyboard, a touchscreen device, or a sensor device.

It should be understood that the apparatus 1300 may correspond to the control device 1400, and may correspond to a corresponding entity in the model training method based on the hybrid parallelism manner according to embodiments of this application. In addition, the foregoing and other operations and/or functions of the modules in the control device 1400 are separately used to implement corresponding procedures of the methods in FIG. 3 to FIG. 9. For brevity, details are not described herein again.

In an example embodiment, a computer-readable storage medium is further provided, for example, a memory including at least one piece of program code. The program code may be executed by a processor in a control device to complete the model training method based on the hybrid parallelism manner. For example, the computer-readable storage medium is a non-transitory computer-readable storage medium, such as a read-only memory (read-only memory, ROM), a random access memory (random access memory, RAM), a compact disc read-only memory (compact disc read-only memory, CD-ROM), a magnetic tape, a floppy disk, or an optical data storage device.

An embodiment of this application further provides a computer program product or a computer program. The computer program product or the computer program includes at least one piece of program code. Computer instructions are stored in a computer-readable storage medium. A processor of a control device reads the program code from the computer-readable storage medium, and the processor executes the program code, so that the control device performs the model training method based on the hybrid parallelism manner.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the model training method based on the hybrid parallelism manner.

The apparatus, the device, the computer-readable storage medium, the computer program product, or the chip provided in embodiments of this application is configured to perform the corresponding method provided above. Therefore, for beneficial effects that can be achieved, refer to the beneficial effects of the corresponding method provided above. Details are not described herein again.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term "example", "for example", or the like indicates an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, both the data batch and the neural network model in this application are obtained under full authorization.

All of the foregoing technical solutions may form optional embodiments of the present disclosure through any combination. Details are not described herein.

The foregoing descriptions are merely optional embodiments of this application, but are not intended to limit this application. Any modification, equivalent replacement, or improvement made without departing from the spirit and principle of this application should fall within the protection scope of this application.

## Claims

1. A model training method based on a hybrid parallelism manner, wherein the hybrid parallelism manner comprises a data parallelism manner and a pipeline parallelism manner, and the method comprises:
determining a plurality of pipeline stages of a neural network model in the pipeline parallelism manner, wherein each pipeline stage comprises a plurality of sub-stages of the neural network model, sub-stages at same locations in adjacent pipeline stages are consecutive in the neural network model, and the sub-stage comprises at least one network layer of the neural network model; and
invoking, in the hybrid parallelism manner according to a sequence of sub-stages in the neural network model, computing nodes corresponding to the plurality of pipeline stages, to perform iterative training on network layers in the corresponding pipeline stages.

2. The method according to claim 1, wherein determining the plurality of pipeline stages of the neural network model in the pipeline parallelism manner comprises:
determining a plurality of slices of the neural network model, wherein each slice comprises a plurality of consecutive network layers in the neural network model;
partitioning each of the plurality of slices, to obtain a plurality of sub-stages of each slice, wherein network layers in adjacent sub-stages are consecutive; and
combining sub-stages at same locations in the plurality of slices to form a pipeline stage.

3. The method according to 1 or 2, wherein invoking, in the hybrid parallelism manner according to the sequence of the sub-stages in the neural network model, the computing nodes corresponding to the plurality of pipeline stages, to perform iterative training on the network layers in the corresponding pipeline stages comprises:
in any iterative training process, invoking, in the pipeline parallelism manner according to the sequence of the sub-stages in the neural network model, the computing nodes corresponding to the plurality of pipeline stages, and sequentially obtaining gradient information of each sub-stage in a corresponding pipeline stage for a plurality of data batches; and
updating, in the data parallelism manner, model parameters of a network layer in one sub-stage based on gradient information of the sub-stage for the plurality of data batches, each time the gradient information of the sub-stage for the plurality of data batches is obtained.

4. The method according to claim 3, wherein invoking, in the pipeline parallelism manner according to the sequence of the sub-stages in the neural network model, the computing nodes corresponding to the plurality of pipeline stages, and sequentially obtaining the gradient information of each sub-stage in the corresponding pipeline stage for the plurality of data batches comprises:
for any sub-stage in any pipeline stage, each time a forward data batch of the sub-stage is obtained, invoking a first computing node, and performing forward propagation computation on the forward data batch based on model parameters of a network layer in the sub-stage, to obtain a forward computation result of the sub-stage, wherein the first computing node is a computing node corresponding to the pipeline stage, and the forward data batch is any data batch in the plurality of data batches when the sub-stage is the 1^{st} sub-stage of the neural network model, or the forward data batch is a forward computation result of a previous sub-stage of the sub-stage in the neural network model when the sub-stage is not the 1^{st} sub-stage; and
each time a backward data batch of the sub-stage is obtained, invoking the first computing node, performing backward propagation computation on the backward data batch based on the model parameters of the sub-stage to obtain a backward computation result of the sub-stage, and obtaining gradient information of the sub-stage based on the backward computation result, wherein the backward data batch is obtained based on the forward computation result of the sub-stage when the sub-stage is the last sub-stage of the neural network model, or the backward data batch is a backward computation result of a next sub-stage of the sub-stage in the neural network model when the sub-stage is not the last sub-stage.

5. The method according to claim 4, wherein the computing nodes corresponding to the plurality of pipeline stages are located on different computing devices, computing nodes corresponding to a same pipeline stage are located on a same computing device, and the method further comprises:
if the sub-stage is not the last sub-stage of the neural network model, synchronizing the forward computation result of the sub-stage in the first computing node to a second computing node through a point-to-point communication operation in a first communication library, wherein the second computing node is a computing node corresponding to a pipeline stage to which the next sub-stage of the sub-stage in the neural network model belongs; and
if the sub-stage is not the 1^{st} sub-stage of the neural network model, synchronizing the backward computation result of the sub-stage in the first computing node to a third computing node through the communication operation, wherein the third computing node is a computing node corresponding to a pipeline stage to which the previous sub-stage of the sub-stage in the neural network model belongs.

6. The method according to any one of claims 3 to 5, wherein the neural network model is a copy of a target neural network model, and the target neural network model has a plurality of copies; and
updating, in the data parallelism manner, the model parameters of the network layer in the sub-stage based on the gradient information of the sub-stage for the plurality of data batches, each time the gradient information of the sub-stage for the plurality of data batches is obtained comprises:
each time the gradient information of the sub-stage in the plurality of copies for the plurality of data batches is obtained, summing up the gradient information of the sub-stage in the plurality of copies for the plurality of data batches through an all-reduce operation in a second communication library to obtain total gradient information of the sub-stage, and updating the model parameters of the network layer in the sub-stage based on the total gradient information.

7. A model training apparatus based on a hybrid parallelism manner, wherein the hybrid parallelism manner comprises a data parallelism manner and a pipeline parallelism manner, and the apparatus comprises:
a determining module, configured to determine a plurality of pipeline stages of the neural network model in the pipeline parallelism manner, wherein each pipeline stage comprises a plurality of sub-stages of the neural network model, sub-stages at same locations in adjacent pipeline stages are consecutive in the neural network model, and the sub-stage comprises at least one network layer of the neural network model; and
an invoking module, configured to invoke, in the hybrid parallelism manner according to a sequence of sub-stages in the neural network model, computing nodes corresponding to the plurality of pipeline stages, to perform iterative training on network layers in the corresponding pipeline stages.

8. The apparatus according to claim 7, wherein the determining module is configured to:
determine a plurality of slices of the neural network model, wherein each slice comprises a plurality of consecutive network layers in the neural network model;
partition each of the plurality of slices, to obtain a plurality of sub-stages of each slice, wherein network layers in adjacent sub-stages are consecutive; and
combine sub-stages at same locations in the plurality of slices to form a pipeline stage.

9. The apparatus according to claim 7 or 8, wherein the invoking module comprises:
an invoking unit, configured to: in any iterative training process, invoke, in the pipeline parallelism manner according to the sequence of the sub-stages in the neural network model, the computing nodes corresponding to the plurality of pipeline stages, and sequentially obtain gradient information of each sub-stage in a corresponding pipeline stage for a plurality of data batches; and
an update unit, configured to update, in the data parallelism manner, model parameters of a network layer in one sub-stage based on gradient information of the sub-stage for the plurality of data batches, each time the gradient information of the sub-stage for the plurality of data batches is obtained.

10. The apparatus according to claim 9, wherein the invoking unit is configured to:
for any sub-stage in any pipeline stage, each time a forward data batch of the sub-stage is obtained, invoke a first computing node, and perform forward propagation computation on the forward data batch based on model parameters of a network layer in the sub-stage, to obtain a forward computation result of the sub-stage, wherein the first computing node is a computing node corresponding to the pipeline stage, and the forward data batch is any data batch in the plurality of data batches when the sub-stage is the 1^{st} sub-stage of the neural network model, or the forward data batch is a forward computation result of a previous sub-stage of the sub-stage in the neural network model when the sub-stage is not the 1^{st} sub-stage; and
each time a backward data batch of the sub-stage is obtained, invoke the first computing node, perform backward propagation computation on the backward data batch based on the model parameters of the sub-stage to obtain a backward computation result of the sub-stage, and obtain gradient information of the sub-stage based on the backward computation result, wherein the backward data batch is obtained based on the forward computation result of the sub-stage when the sub-stage is the last sub-stage of the neural network model, or the backward data batch is a backward computation result of a next sub-stage of the sub-stage in the neural network model when the sub-stage is not the last sub-stage.

11. The apparatus according to claim 10, wherein the computing nodes corresponding to the plurality of pipeline stages are located on different computing devices, computing nodes corresponding to a same pipeline stage are located on a same computing device, and the apparatus further comprises:
a synchronization module, configured to: if the sub-stage is not the last sub-stage of the neural network model, synchronize the forward computation result of the sub-stage in the first computing node to a second computing node through a point-to-point communication operation in a first communication library, wherein the second computing node is a computing node corresponding to a pipeline stage to which the next sub-stage of the sub-stage in the neural network model belongs; and
the synchronization module is further configured to: if the sub-stage is not the 1^{st} sub-stage of the neural network model, synchronize the backward computation result of the sub-stage in the first computing node to a third computing node through the communication operation, wherein the third computing node is a computing node corresponding to a pipeline stage to which the previous sub-stage of the sub-stage in the neural network model belongs.

12. The apparatus according to any one of claims 9 to 11, wherein the neural network model is a copy of a target neural network model, and the target neural network model has a plurality of copies; and the update unit is configured to:
each time the gradient information of the sub-stage in the plurality of copies for the plurality of data batches is obtained, sum up the gradient information of the sub-stage in the plurality of copies for the plurality of data batches through an all-reduce operation in a second communication library to obtain total gradient information of the sub-stage, and update the model parameters of the network layer in the sub-stage based on the total gradient information.

13. A control device, wherein the control device comprises a processor, and the processor is configured to execute program code, so that the control device performs the method according to any one of claims 1 to 6.

14. A computer-readable storage medium, wherein the storage medium stores at least one piece of program code, and the at least one piece of program code is read by a processor, so that a control device performs the method according to any one of claims 1 to 6.
